# EUROPEAN PATENT SPECIFICATION

(11) **EP 4 634 803 B1**
(45) Date of publication and mention of the grant of the patent: **14.10.2026**
(21) Application number: 23841561.6
(22) Date of filing: 08.12.2023
(51) Int. Cl.: G06F 21/55, G06F 21/56, G06N 3/09, H04L 9/40, G06N 3/047, G06N 5/01, G06N 20/20

(54) **METHOD AND SYSTEM FOR DETECTING MALICIOUS APPLICATIONS**
VERFAHREN UND SYSTEM ZUR ERKENNUNG BÖSARTIGER ANWENDUNGEN
PROCÉDÉ ET SYSTÈME DE DÉTECTION D'APPLICATIONS MALVEILLANTES

(30) Priority: 15.12.2022 IN 202241072545; 16.01.2023 EP 23151759
(43) Date of publication of application: 22.10.2025
(73) Proprietor: Microsoft Technology Licensing, LLC, Redmond, WA 98052-6399 (US)
(72) Inventor: SEWAK, Mohit, Redmond, Washington 98052-6399 (US); NAGARALU, Sree Hari, Redmond, Washington 98052-6399 (US); MOTHILAL, Sudarson, Redmond, Washington 98052-6399 (US); JODHA, Rituraj Singh, Redmond, Washington 98052-6399 (US); BIJU, Emil, Redmond, Washington 98052-6399 (US); PUTTAGUNTA, Vasundhara, Redmond, Washington 98052-6399 (US); SR, Venkatachalabathy, Redmond, Washington 98052-6399 (US); MANYAM, Sai Supreeth, Redmond, Washington 98052-6399 (US)
(74) Representative: Page White Farrer
(86) International application number: PCT/US2023/083021
(87) International publication number: WO 2024/129521

(56) References cited:
- CN-A- 111 814 148
- US-B1- 11 003 773
- US-B1- 7 873 947

## Description

### Technical Field

The present disclosure relates to cybersecurity, and in particular to methods and systems for identifying malicious computer applications, such as web applications.

### Background

There exist various methods for identifying malicious web applications. These range from heuristic rules defined by threat Smaller or Medium Sized Enterprises (SME)s or threat hunters to many types of Machine Learning classification and anomaly detection solutions. However, threat actors employ advanced and evasive tactics to evade such detection and carry out successful campaigns. A campaign may comprise one or multiple applications used simultaneously in a cyberattack.

US 11003773 B1 describes a method for generating rule recommendation utilized in a creation of malware detection rules is described. Meta-information associated with a plurality of events collected during a malware detection analysis of an object by a cybersecurity system is received and a first plurality of features is selected from the received meta-information. Machine learning (ML) models are applied to each of the first plurality of features to generate a score that represents a level of maliciousness for the feature and thereby a degree of usefulness of the feature in classifying the object as malicious or benign.

US 7873947 B1 describes a method for comparing malware or other types of computer programs, and for optionally using such a comparison method for (a) searching for matching programs in a collection of programs, (b) classifying programs, and (c) constructing a classification or a partitioning within a collection of programs.

CN 111814148 A describes an Android malicious software family clustering method based on a method call graph. The method belongs to the field of Android malicious software detection.

### Summary

According to an aspect disclosed herein, there is provided a method and system for validating a set of candidate features as suitable for determining the maliciousness of an application. These candidate features may be used to train a threat detection model for determining the maliciousness of applications. If an application is determined to be malicious, a cybersecurity mitigation action can be performed.

According to a further aspect disclosed herein, there is provided a method and system for determining a reputation score of an application-related entity. The reputation score can be used to determine if an application is likely to be malicious or not, based on the application's relationship with the application-related entity. If an application is determined to be malicious, a cybersecurity mitigation action can be performed.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all the disadvantages noted herein.

### Brief Description of the Drawings

To assist understanding of the present disclosure and to show how embodiments may be put into effect, reference is made by way of example to the accompanying drawings in which:
Figure 1(a) is a schematic illustration of a neural network;
Figure 1(b) is a schematic illustration of a neural network arranged to predict a classification based on an input feature vector;
Figure 1(c) is a schematic illustration of a node of a Bayesian neural network;
Figure 2 is a schematic illustration of a computing apparatus for implementing a neural network;
Figure 3 schematically illustrates a data set comprising a plurality of data points each comprising one or more feature values;
Figure 4 schematically shows a method of determining application features that can be used to distinguish malicious and non-malicious applications;
Figure 5 schematically shows a method of determining application features that can be used to distinguish malicious and non-malicious applications;
Figure 6 shows a graph of relationships between applications and application features;
Figure 7A shows a method of supervised learning for a classification model;
Figure 7B shows a method of using a classification model to determine whether to perform a cybersecurity mitigation action;
Figure 8 shows a method for determining a reputation score for an entity;
Figure 9A shows a method for determining a classification model for new applications;
Figure 9B shows a method for classifying a new application using the model of Figure 9A;
Figure 10 shows an example apparatus;
Figure 11 shows an example method flow;
Figure 12 shows an example method flow.

### Detailed Description

The described embodiments implement cybersecurity threat detection and mitigation using a graph-based representation of applications and related entities. The graph (a neural network) provides information on linkages between the applications and the entities related to the applications that may not otherwise be determined using known machine learning methods. Such a graph can be used to provide more accurate detection of malicious applications. By using the graph, the number of compute cycles needed to detect a malicious application can be reduced. Various machine learning (ML) techniques are utilized in this context.

Systems and methods incorporating the aforementioned approach are described below.

The described methodology not only improves the detection rate for existing (malicious application detection) attacks but is also capable of detecting new ('zero-day') attacks. A zero-day attack exploits a software or system vulnerability that does not yet have a fix, and which may be unknown to the developer or vendor. Data about the attack is inherently limited at this point.

The described methodology is also capable of detecting malicious applications before any interaction, behavior or activity data is available. With this capability the system can also be used for detecting malicious applications and zero-day campaigns in scenarios where the computation of (statistical) anomaly scores is not feasible.

As described in detail below, the methodology is performed in various phases that are briefly summarized as follows.

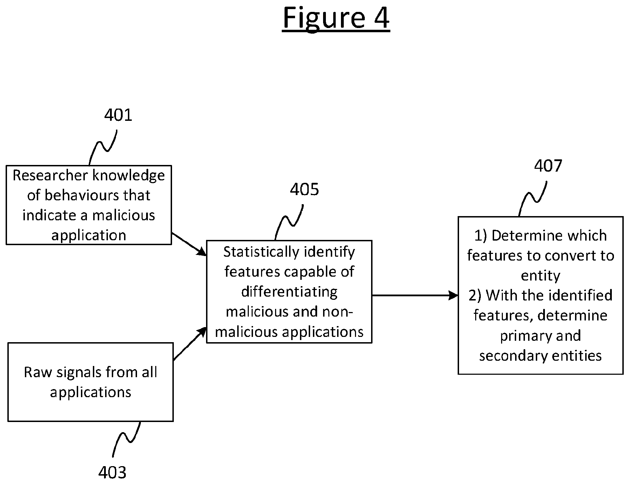

In Phase 1 (FIG. 4), application data pertaining to known applications are collected. The application data provides a rich source of information from which structured features may be derived. An aim is to find a particular combination (or combinations) of features that are relevant for differentiating between malicious and benign applications. A particular choice of features may be referred to as a feature space, of which each feature defines a dimension.

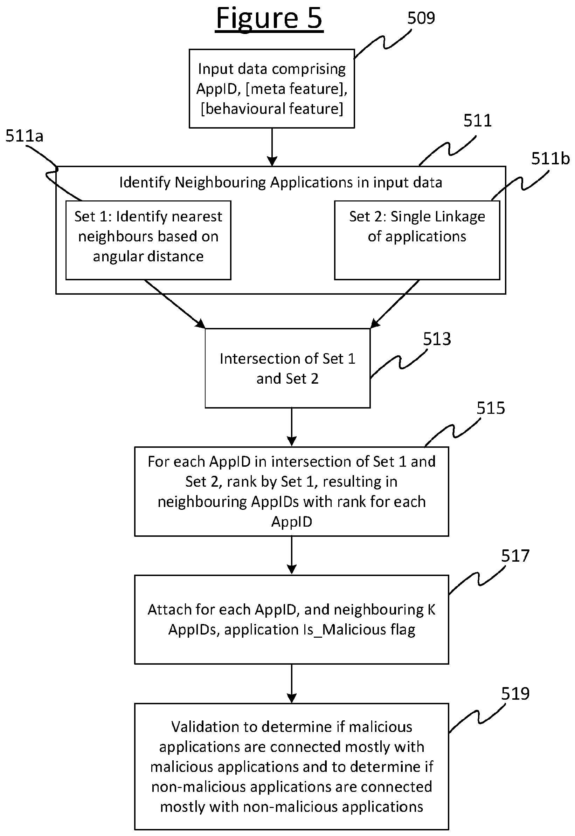

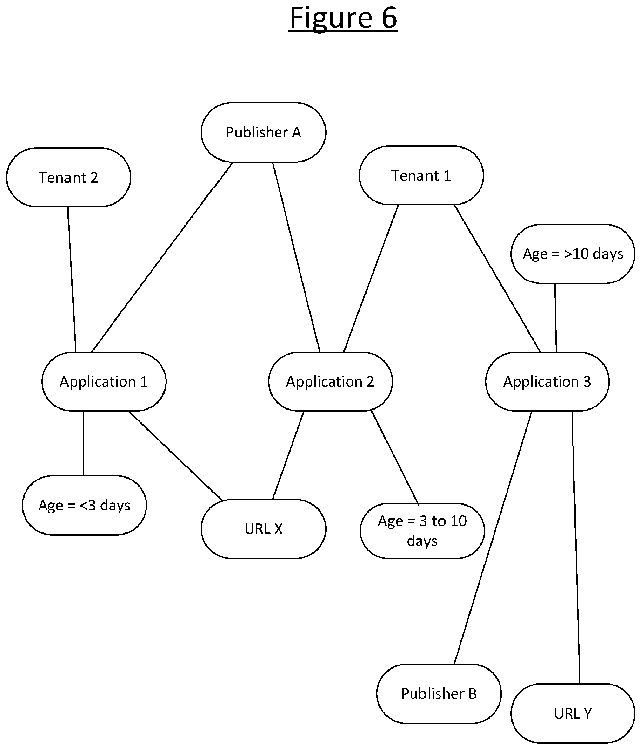

The applications of Phase 1 have known threat statuses (they are known to be malicious or benign). In Phase 2 (FIG. 5), a graph (FIG. 6) is constructed based on known links between the applications and other application-related entities (such as resources, domains, tenants etc.). The graph is, in turn, used to determine 'neighbor relationships' between applications utilizing two metrics: a distance metric applied in feature space, and a graph-based metric that takes into account connectedness within the graph. In the described examples, a neighbor relationship is assigned to first and second applications when (i) they are sufficiently nearby in feature space (based on the distance metric; e.g., within K-nearest neighbors of each other) and (ii) when they are connected to a common entity in the graph. In that case, the first application and the second application are said to be neighbors (note, this usage of 'neighbor' terminology implies more than simply neighboring in feature space; those applications must also be connected to a common entity in the graph to be neighbors in this sense). The graph is used to validate the feature space (the chosen combination of features) in the following manner. Applications are grouped according to their neighbor relations, and the feature space is determined to be valid when malicious applications are grouped together and non-malicious applications are grouped together (separate from the malicious applications), up to a specified level of accuracy.

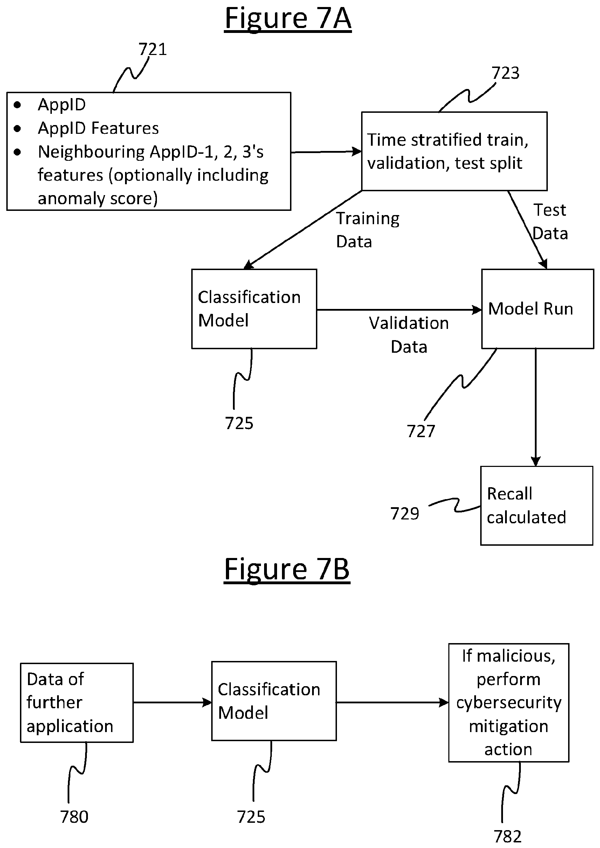

In Phase 3 (FIG. 7), having validated the graph, the applications and their neighbor relationships are used to train a threat detection model, such as a classification model. The threat detection model of Phase 3 takes as inputs: (i) the feature vector of a 'target' application (whose threat status is to be predicted), (ii) the feature vector(s) of its neighbor(s), and (iii) an anomaly score(s) of the neighbor(s) (a higher anomaly score indicates that an application is more likely to be malicious). From those inputs, the threat detection model attempts to predict a threat status of the target application. In training, that threat status is known, and the known threat status serves as ground truth. The threat detection model is trained to minimize an overall measure of difference between the known threat scores and the predicted threat scores across a training set. The classification model is then tested on labelled test data to determine if the classification model meets a threshold accuracy requirement for classifying applications as malicious or non-malicious. If this threshold accuracy requirement is met, this indicates that a subset of the set of chosen features (the feature space) of Phase 3 may be suitable for use in Phase 4.

In Phase 4 a subset of the chosen features (that is, a sub-space of the feature space of Phase 3) is chosen.

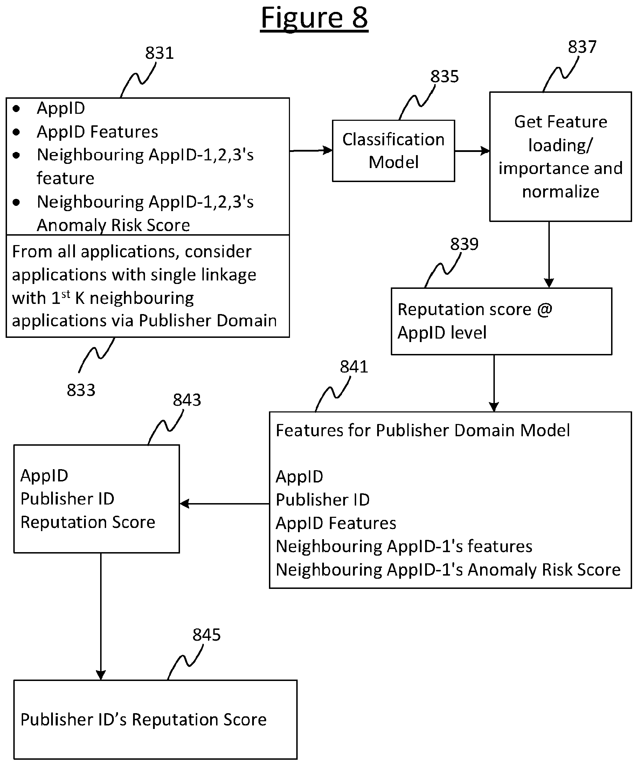

In Phase 4 (FIG. 8), respective reputation scores are determined for values of the input dataset of features that can be measured when an application is launched (such features are referred to as "primary entities" herein). For example, a reputation score of each publisher ID for applications in the dataset of applications can be determined. To determine reputation scores of each of the primary entities, behavioural data of each application in the dataset of Phase 4 is removed, and a classification model that outputs relative feature importance is trained and validated. Based on a reputation score for each application and the relative feature importance in the dataset, an aggregation for each primary entity value is performed over all applications, to provide a reputation score for each primary entity value.

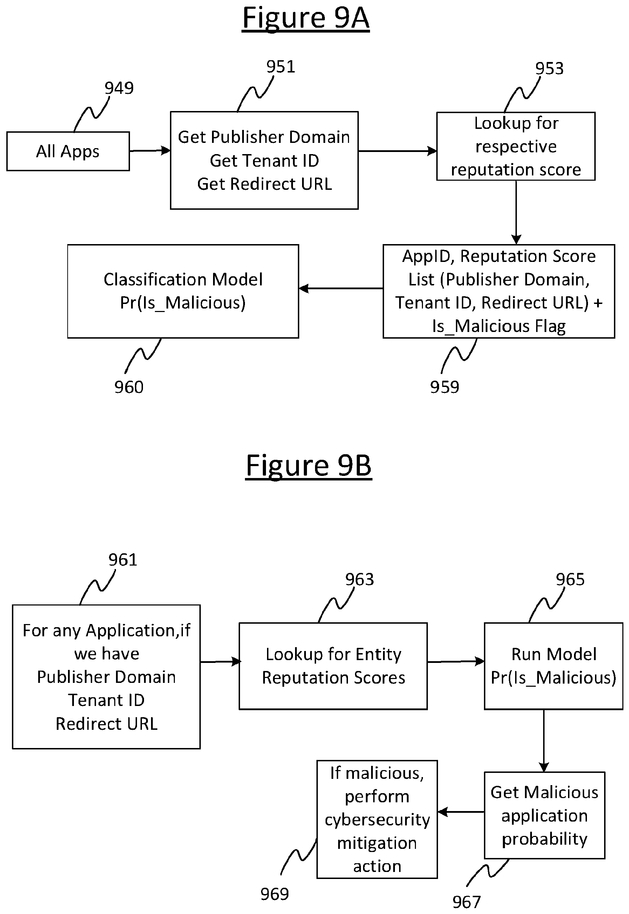

In Phase 5 (FIG. 9A and 9B), the determined reputation scores of primary entities are used to train a classification model. Once trained, the Phase 5 classification model can be used to detect malicious and non-malicious applications, even when the applications are zero-day applications (i.e., the applications have just been launched).

By detecting malicious zero-day applications, the threat of these applications can be mitigated before they cause harm.

First however there is described an example system in which the presently disclosed techniques may be implemented. There is also provided an overview of the principles behind neural networks, based upon which embodiments may be built or expanded.

Neural networks and other machine learning models are used in the field of machine learning and artificial intelligence (Al). A neural network comprises a plurality of nodes which are interconnected by links, sometimes referred to as edges. The input edges of one or more nodes form the input of the network as a whole, and the output edges of one or more other nodes form the output of the network, whilst the output edges of various nodes within the network form the input edges to other nodes. Each node represents a function of its input edge(s) weighted by a respective weight; the result being output on its output edge(s). The weights can be gradually tuned based on a set of experience data (e.g., training data) to tend towards a state where the output of the network will output a desired value for a given input.

Typically, the nodes are arranged into layers with at least an input and an output layer. The neural network can take input data and propagate the input data through the layers of the network to generate output data. Certain nodes within the network perform operations on the data, and the result of those operations is passed to other nodes, and so on.

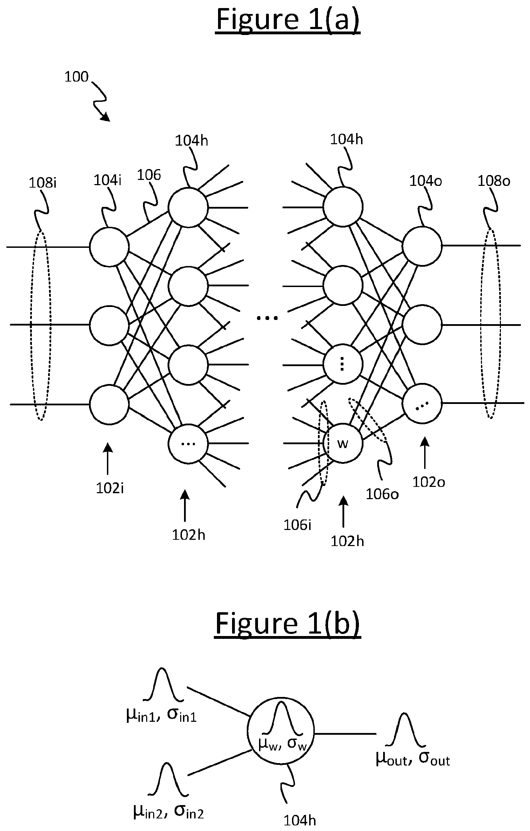

Figure 1(a) gives a simplified representation of an example neural network 108. The example neural network comprises multiple layers of nodes 104: an input layer 102i, one or more hidden layers 102h and an output layer 102o. In practice, there may be many nodes in each layer, but for simplicity only a few are illustrated. Each node is configured to generate an output by carrying out a function on the values input to that node. The inputs to one or more nodes form the input of the neural network, the outputs of some nodes form the inputs to other nodes, and the outputs of one or more nodes form the output of the network.

At some or all the nodes of the network, the input to that node is weighted by a respective weight. A weight may define the connectivity between a node in a given layer and the nodes in the next layer of the neural network. A weight can take the form of a scalar or a probabilistic distribution. When the weights are defined by a distribution, as in a Bayesian model, the neural network can be fully probabilistic and captures the concept of uncertainty. The values of the connections 106 between nodes may also be modelled as distributions. This is illustrated schematically in Figure 1(b). The distributions may be represented in the form of a set of samples or a set of parameters parameterizing the distribution (e.g., the mean µ and standard deviation σ or variance σ²).

The network learns by operating on data input at the input layer, and, based on the input data, adjusting the weights applied by some or all the nodes in the network. There are different learning approaches, but in general there is a forward propagation through the network from left to right in Figure 1(a), a calculation of an overall error, and a backward propagation of the error through the network from right to left in Figure 1(a). In the next cycle, each node takes into account the back propagated error and produces a revised set of weights. In this way, the network can be trained to perform its desired operation.

The input to the network is typically a vector, each element of the vector representing a different corresponding feature. E.g., in the case of image recognition, the elements of this feature vector may represent different pixel values, or in a medical application the different features may represent different symptoms. The output of the network may be a scalar or a vector. The output may represent a classification, e.g., an indication of whether a certain object such as an elephant is recognized in the image, or a diagnosis of the patient in the medical example.

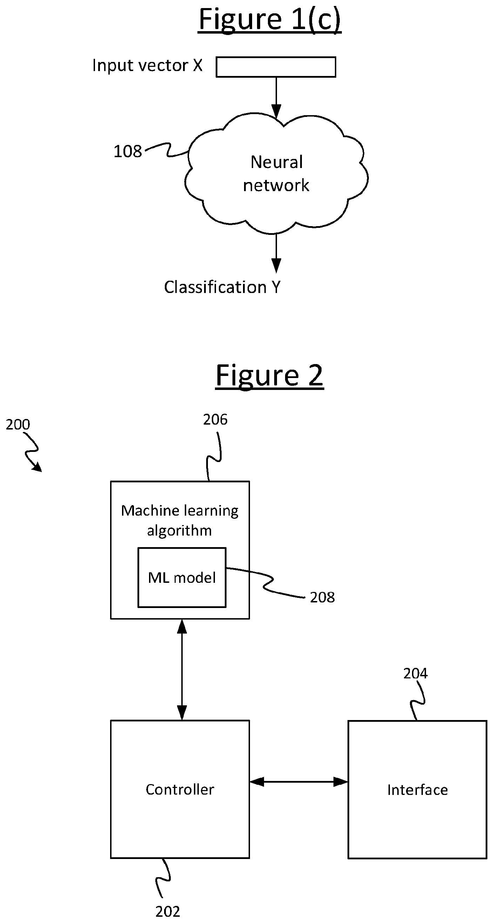

Figure 1(c) shows a simple arrangement in which a neural network is arranged to predict a classification based on an input feature vector. During a training phase, experience data comprising a large number of input data points is supplied to the neural network, each data point comprising an example set of values for the feature vector, labelled with a respective corresponding value of the classification (e.g., elephant or not elephant). Over many such example data points, the learning algorithm tunes the weights to reduce the overall error in the network. Once trained with a suitable number of data points, a target feature vector can then be input to the neural network without a label, and the network can instead predict the value of the classification based on the input feature values and the tuned weights.

Training in this manner is sometimes referred to as a supervised approach. Other approaches are also possible, such as a reinforcement approach wherein the network each data point is not initially labelled. The learning algorithm begins by guessing the corresponding output for each point, and is then told whether it was correct, gradually tuning the weights with each such piece of feedback. Another example is an unsupervised approach where input data points are not labelled at all, and the learning algorithm is instead left to infer its own structure in the experience data.

Figure 2 illustrates an example computing apparatus 200 for implementing an artificial intelligence (AI) algorithm including a machine-learning model in accordance with embodiments described herein. The computing apparatus 200 may take the form of a user terminal such as a desktop computer, laptop computer, tablet, smartphone, wearable smart device such as a smart watch, an on-board computer of a vehicle such as car, or a managing computing system for a set of sensors etc. Additionally, or alternatively, the computing apparatus 200 may comprise a server. A server herein refers to a logical entity which may comprise one or more physical server units located at one or more geographic sites. Where required, distributed or "cloud" computing techniques are in themselves known in the art. The one or more user terminals and/or the one or more server units of the server may be connected to one another via a packet-switched network, which may comprise for example a wide-area internetwork such as the Internet, a mobile cellular network such as a 3GPP network, a wired local area network (LAN) such as an Ethernet network, or a wireless LAN such as a Wi-Fi, Thread or 6LoWPAN network.

The computing apparatus 200 comprises at least a controller 202, an interface (e.g., a user interface) 204, and an artificial intelligence (AI) algorithm 206. The controller 202 is operatively coupled to each of the interface 204 and the Al algorithm 206.

Each of the controller 202, interface 204 and Al algorithm 206 may be implemented in the form of software code embodied on computer readable storage and run on processing apparatus comprising one or more processors such as CPUs, work accelerator co-processors such as GPUs, and/or other application specific processors, implemented on one or more computer terminals or units at one or more geographic sites. The storage on which the code is stored may comprise one or more memory devices employing one or more memory media (e.g., electronic or magnetic media), again implemented on one or more computer terminals or units at one or more geographic sites. In embodiments, one, some or all the controller 202, interface 204 and Al algorithm 206 may be implemented on the server. Alternatively, a respective instance of one, some or all of these components may be implemented in part or even wholly on each of one, some or all of the one or more user terminals. In further examples, the functionality of the above-mentioned components may be split between any combination of the user terminals and the server. Again, it is noted that, where required, distributed computing techniques are in themselves known in the art. It is also not excluded that one or more of these components may be implemented in dedicated hardware.

The controller 202 comprises a control function for coordinating the functionality of the interface 204 and the Al algorithm 206. The interface 204 refers to the functionality for receiving and/or outputting data. The interface 204 may comprise a user interface (UI) for receiving and/or outputting data to and/or from one or more users, respectively; or it may comprise an interface to a UI on another, external device. Alternatively, the interface may be arranged to collect data from and/or output data to an automated function implemented on the same apparatus or an external device. In the case of an external device, the interface 204 may comprise a wired or wireless interface for communicating, via a wired or wireless connection respectively, with the external device. The interface 204 may comprise one or more constituent types of interface, such as voice interface, and/or a graphical user interface. The interface 204 may present a UI front end to the user(s) through one or more I/O modules on their respective user device(s), e.g., speaker and microphone, touch screen, etc., depending on the type of user interface. The logic of the interface may be implemented on a server and output to the user through the I/O module(s) on his/her user device(s). Alternatively, some or all the logic of the interface 204 may also be implemented on the user device(s) 102 its/themselves.

The controller 202 is configured to control the Al algorithm 206 to perform operations in accordance with the embodiments described herein. It will be understood that any of the operations disclosed herein may be performed by the Al algorithm 206, under control of the controller 202 to collect experience data from the user and/or an automated process via the interface 204, pass it to the Al algorithm 206, receive predictions back from the Al algorithm and output the predictions to the user and/or automated process through the interface 204.

The Al algorithm 206 comprises a machine-learning model 208, comprising one or more constituent statistical models such as one or more neural networks.

Figure 1(a) illustrates the principle behind a neural network. A neural network 100 comprises a collection of interconnected nodes 104 and edges 106 connecting between nodes, all implemented in software. Each node 104 has one or more input edges and one or more output edges. The input edges of one or more of the nodes 104 form the overall input 108i to the neural network (typically an input vector, i.e., there are multiple input edges, or tensor). The output edges of one or more of the nodes 104 form the overall output 108o of the neural network (which may be an output vector in the case where there are multiple output edges, or output tensor). Further, the output edges of at least some of the nodes 104 form the input edges of at least some others of the nodes 104.

Each node 104 represents a function of the input value(s) received on its input edges(s) 106i, the outputs of the function being output on the output edge(s) 106o of the respective node 104, such that the value(s) output on the output edge(s) 106o of the node 104 depend on the respective input value(s) according to the respective function. The function of each node 104 is also parametrized by one or more respective parameters w, sometimes also referred to as weights (not necessarily weights in the sense of multiplicative weights, though that is certainly one possibility). Thus, the relation between the values of the input(s) 106i and the output(s) 106o of each node 104 depends on the respective function of the node and its respective weight(s).

Each weight could simply be a scalar value. Alternatively, as shown in Figure 1(b), at some or all of the nodes 104 in the network 100, the respective weight may be modelled as a probabilistic distribution such as a Gaussian. In such cases the neural network 100 is sometimes referred to as a Bayesian neural network. Optionally, the value input/output on each of some or all of the edges 106 may each also be modelled as a respective probabilistic distribution. For any given weight or edge, the distribution may be modelled in terms of a set of samples of the distribution, or a set of parameters parameterizing the respective distribution, e.g., a pair of parameters specifying its centre point and width (e.g., in terms of its mean µ and standard deviation σ or variance σ²).

As shown in Figure 1(a), the nodes 104 of the neural network 100 may be arranged into a plurality of layers, each layer comprising one or more nodes 104. In a so-called "deep" neural network, the neural network 100 comprises an input layer 102i comprising one or more input nodes 104i, one or more hidden layers 102h (also referred to as inner layers) each comprising one or more hidden nodes 104h (or inner nodes), and an output layer 102o comprising one or more output nodes 104o. For simplicity, only two hidden layers 102h are shown in Figure 1(a), but many more may be present.

The different weights of the various nodes 104 in the neural network 100 can be gradually tuned based on a set of experience data (e.g., training data), so as to tend towards a state where the output 108o of the network will produce a desired value for a given input 108i. For instance, before being used in an actual application, the neural network 100 may first be trained for that application. Training comprises inputting experience data in the form of training data to the inputs 108i of the neural network and then tuning the weights w of the nodes 104 based on feedback from the output(s) 108o of the neural network. The training data comprises multiple different input data points, each comprising a value or vector of values corresponding to the input edge or edges 108i of the neural network 100. In some examples, training data may comprise a set of ground truth data. In some examples, the training data may comprise ground truth data with some of the data removed.

For instance, consider a simple example as in Figure 1(c) where the machine-learning model comprises a single neural network 100, arranged to take a feature vector X as its input 108i and to output a classification Y as its output 108o. The input feature vector X comprises a plurality of elements x_{d}, each representing a different feature d = 0, 1, 2, ... etc. E.g., in the example of image recognition, each element of the feature vector X may represent a respective pixel value. For instance, one element represents the red channel for pixel (0,0); another element represents the green channel for pixel (0,0); another element represents the blue channel of pixel (0,0); another element represents the red channel of pixel (0,1); and so forth. As another example, where the neural network is used to make a medical diagnosis, each of the elements of the feature vector may represent a value of a different symptom of the subject, or physical feature of the subject or other fact about the subject (e.g., body temperature, blood pressure, etc.).

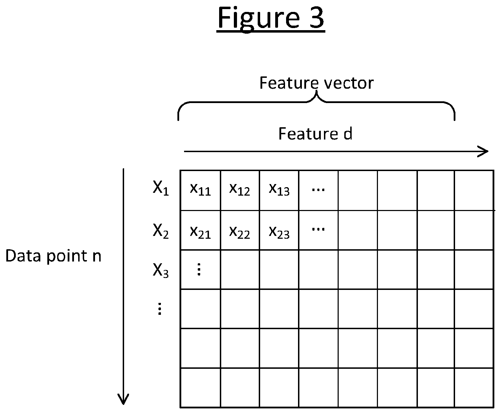

Figure 3 shows an example data set comprising a plurality of data points n = 0, 1, 2, ... etc. Each data point n comprises a respective set of values of the feature vector (where x_{nd} is the value of the dₜₕ feature in the nₜₕ data point). The input feature vector Xₙ represents the input observations for a given data point, where in general any given observation i may or may not comprise a complete set of values for all the elements of the feature vector X.

Once trained, the neural network 100 can then be used to infer a value of the output 108o for a given value of the input vector 108i (X), or vice versa.

Explicit training based on labelled training data is sometimes referred to as a supervised approach. Other approaches to machine learning are also possible. After making the prediction for each data point n (or at least some of them), the Al algorithm 206 receives feedback (e.g., from a human) as to whether the prediction was correct and uses this to tune the weights so as to perform better next time. Another example is referred to as the unsupervised approach. In this case the Al algorithm receives no labelling or feedback and instead is left to infer its own structure in the experienced input data.

Figure 1A is a simple example of the use of a neural network 100. In some cases, the machine-learning model 208 may comprise a structure of two or more constituent neural networks 100.

Actors who release and/or provide malicious applications ("threat actors") may use at least one of the following tactics to try to avoid detection and defensive mechanisms:
- The threat actors may use a campaign of multiple applications simultaneously to conduct an attack, such that even if one application is detected and brought down, some others may successfully consummate the attack. Examples of campaigns include the Solorigate campaign, the Nobelium campaign and the Polonium campaign.
- The threat actors may alter behaviour signatures (activity scale/frequency across different meta/behavioural properties, e.g., Application Programming Interface (API) access) to evade detection from anomaly-based detection methods.
- In the presence of defensive techniques that identify a specific pattern of the threat campaign (e.g., multiple apps belonging to the same publisher, having a similar landing/response URL, created around similar times, etc.), the threat actor may resort to more than one pattern to evade such techniques.
- The threat actors may use sleeper applications and activate their malicious intent at different times or on a need-basis to avoid detection of a campaign, even if a single/some malicious applications are detected.
- Instead of creating new malicious applications, the threat actor may breach into a trusted service principal/ tenant, and compromise existing applications, instead of creating new malicious applications. This helps to evade behaviour anomaly-based detection.

A graph-based Al method is provided. Reputation scores or risk scores may be assigned to entities that have a relationship with an application.

The following are examples of entities that may have a relationship with an application: publisher domain; publisher tenant ID; reply URL. Publisher domain, publisher tenant ID and reply URL are examples of entities that are suitable to use as primary entities as they are available when an application is newly released (and therefore suitable for characterizing an application from a "cold-start"). Primary entities as referred to herein are entities included in the graph used to show linkages between applications (as shown e.g., in the method of Figure 5), and used to aggregate risk or reputation upon (as shown e.g., in the method of Figure 8).

The following are also examples of further entities that may have a relationship with an application: age of application; past security alerts triggered by the application; if the application name includes certain suspicious keywords; if the application has required for certain suspicious permissions. These entities are suitable to use as secondary entities. Secondary entities as referred to herein are included in the graph used to show linkages between applications (as shown e.g., in the method of Figure 5), but are not used to aggregate risk or reputation upon (as shown e.g., in the method of Figure 8).

Entities may also include behavioural features of an application, such as, for example: a number of keyword searches by the application; a number of SharePoint search requests by the application; a number of message rules created by the application; a number of successful message request sent by the application. These behavioural features are also suitable to use as secondary entities.

Any of the above entities may be used to indicate that an application is malicious.

Figure 4 shows an example method for identifying a set of features to use as entities for detecting a malicious application. The features input at 401 and 403 and analyzed at 405 may be considered to be candidate features. Researcher knowledge of behaviours that indicate that web applications are malicious, shown at 401, may be used to identify features capable of differentiating malicious and non-malicious applications at 405. The identification of features capable of differentiating malicious and non-malicious applications at 405 is discussed further with respect to Figure 5 below. The identification of features capable of differentiating malicious and non-malicious applications at 405 may comprise a statistical analysis.

Figure 4 also shows at 403 that raw signals from all applications may be used to identify features capable of differentiating malicious and non-malicious applications. For example, if a user at 403 reviews signals for a sample of applications and finds certain raw signals correlate with an application being either malicious or non-malicious, then these features may be used at 405.

At 407, after the features capable of differentiating malicious and non-malicious applications are determined, it is determined which features to convert to be used as entities in a machine learning model. An entity may comprise a feature used in a graph (such as the graph of figure 6) to differentiate malicious and non-malicious applications. An application-related entity may comprise a value for an entity, e.g. an application related entity may be Publisher A.

At 407, it is also determined which of the entities are to be used as primary entities, and which of the entities are to be used as secondary entities. Primary entities are included in the graph used to show linkages between applications in a graph used in the method of Figure 5 and are also used as features to aggregate risk or reputation upon. Secondary entities are used to show linkages between applications in the graph in the method of Figure 5 but are not used as features to aggregate risk upon. Entities that are neither primary or secondary entities may be considered to comprise numerical entities. Numerical entities are not used to show linkages between applications in the graph used in the method of Figure 5, but may be used in calculating risk distributions. Primary entity values are available when an application is released (e.g., publisher ID, tenant ID, reply URL). Secondary entity values are only available after an application is released (e.g., behavioural features of the application).

Figure 5 shows a method for determining if features determined as potentially being able to differentiate malicious and non-malicious applications are capable of differentiating malicious and non-malicious applications. The method of Figure 5 may be performed at 405 of Figure 4.

At 509, input data comprising information for two or more applications is input. Each application in the input data may be labelled with a flag indicating if the application is malicious or not. The input data comprises an application identifier (AppID) for each application, as well as at least one meta feature for each ApplD. A meta feature comprises a feature tested using the method of Figure 5 to determine if the feature can be used as an entity to distinguish malicious and non-malicious applications. The input data may also comprise at least one behavioural feature for each ApplD. The at least one meta feature and at least one behavioural feature may comprise features identified at 401 and/or 403 of Figure 4.

At 511, neighbouring applications in the input data of 509 are determined. This can be performed using two different methods.

At 511a, nearest neighbours in the input data are determined based on angular distance between different applications to provide Set 1. Angular distance can be computed between two applications as a cosine difference value or a cosine similarity value between respective feature vectors assigned to those applications in feature space. The cosine similarity between two feature vectors *u, v* is defined as $cos {θ}_{u , v} = \frac{u . v}{\left|u\right| \left|v\right|} ,$ and the cosine difference is defined as 1 - cos *θ_{u,v}*.

Each application may be mapped in a feature space having n variables, where each variable corresponds to a meta feature or behavioural feature. When mapped into the feature space, K nearest neighbours for each application can be determined, where K is an integer. This can be determined based on cosine distance, Euclidean distance or any other suitable distance.

To provide feature mapping, each possible entity value may be assigned a numerical value. For example, in Table 1, applications having an age of less than 3 days may be assigned a value of "0" for Age, applications having an age of 3 to 10 days may be assigned a value of 3 to 10 days may be assigned a value of "1" for Age, applications having an age of >10 days may be assigned a value of "2" for age.

At 511b, applications connected by a single linkage via meta features or behavioural features in an entity graph are determined to provide Set 2. Single linkage in an entity graph is discussed below with respect to Figure 6.

At 513, an intersection of Set 1 and Set 2 are determined. The intersection comprises applications that are in both Set 1 and Set 2.

At 515, the intersection of Sets 1 and 2 are ranked according to the angular distance measurements between each application used to determine Set 1. This results in a list of neighbouring ApplDs, with neighbouring ApplDs for each ApplD ranked according to angular distance.

At 517, for each ApplD and for the K closest ApplDs, an information element indicating whether the application is malicious or not is added. The information element may comprise a flag indicating if the application is malicious. The information element may comprise an "Is_Malicious" flag.

At 519, a validation stage is used to determine if malicious applications are connected to malicious applications and if non-malicious applications are connected with non-malicious applications. The value of K can be varied depending on the accuracy requirements of the model, with more accurate models having a higher value and less accurate models having a lower value. When a threshold value of malicious applications is connected to only K malicious applications, and when a threshold value of malicious applications are connected to only K non-malicious applications, the meta features and behavioural features can be used as entities to differentiate malicious and non-malicious applications.

In an example of differentiating malicious applications and non-malicious applications within an example dataset and using single entity linkage, with K=3 and entities used comprising Publisher Domain, Tenant ID and Redirect URL, malicious applications have been shown to be connected only to malicious applications and non-malicious applications have been shown to be connected only to non-malicious applications. So, in this example and within this example dataset, Publisher Domain, Tenant ID and Redirect URL are suitable entities to distinguish malicious and non-malicious applications.

Figure 6 shows a graph for three applications. Each application may have an identifier. In this example, a first application has the application identifier "Application 1", a second application has the application identifier "Application 2", and a third application has the application identifier "Application 3".

Each node in Figure 6 represents an entity used in the graph. In this example, the entities used are: the age of the application; the tenant of the application; the landing URL of the application; the publisher of the application. The values of each of these entities for Application 1, Application 2 and Application 3 are given in Table 1 below.

**Table 1: A table of values for tenant, landing URL, age and publisher of Applications 1 to 3.**

| **Application ID** | Application 1 | Application 2 | Application 3 |
|---|---|---|---|
| **Tenant** | 2 | 1 | 1 |
| **Landing URL** | X | X | Y |
| **Age** | <3 days | 3 to 10 days | > 10 days |
| **Publisher** | A | A | B |

The entity values for tenant can be assigned based on an identity of a tenant or based on an identity of a tenant group using the application. The entity values for landing URL can be assigned based on an identity of a landing URL. The entity values for publisher can be assigned based on an identity of a publisher or based on an identity of a group of publishers. The entity values for age can be assigned based on an age range in which the application's age is within. In other words, the age values may be discretized. In this example, the values for the age entity can be less than 3 days, 3 to 10 days or more than 10 days.

It should be noted that other entities may be used in the graph. The entity values can be determined from at least one of: an identity of an entity; an identity of a group for the entity; a numerical value of an entity; a range of numerical values for an entity.

The graph shown in Figure 6 can be used to determine linkages between different applications. For example, Application 1 is connected to Application 2 by a single linkage via the publisher entity, as both applications have Publisher A as their publisher entity value. In a further example, Application 2 is connected to Application 3 by a single linkage via the Tenant entity, as both applications have Tenant 1 as their Tenant entity value.

Figure 7A shows a method of supervised learning. In some examples, the method of figure 7A may be performed using AppID features corresponding to entities determined using the method of Figure 5 and/or at 407 of Figure 4 as entities capable of distinguishing malicious and non-malicious applications.

The data input at 721 comprises an application identifier (AppID), and for each AppID the data comprises a value for each of features of the AppID (e.g., publisher ID, tenant ID, Landing URL, Age, etc.). The features of the AppID may be determined using the method of Figure 5 and/or at 407. Each AppID may be labelled as either a malicious or non-malicious application. The data input at 721 also comprises, for each AppID, values of the features of the nearest neighbouring application (Neighbouring AppID-1), the second nearest neighbouring application (Neighbouring ApplD-2) and the third nearest neighbouring application (Neighbouring ApplD-3). The first, second and third nearest neighbours to an application may be determined using angular distance in a feature space of the applications. The first, second and third nearest neighbours may be determined using the ranking of 515 of Figure 5. The data input at 721 may also comprise an anomaly score for each of the first, second and third nearest neighbouring applications.

Based on the data input at 721, a method of supervised learning may be used at 723 to 729 to train a classification model. If the trained classification model is found to meet a threshold recall rate meeting a required threshold False Positive Rate (FPR), it is determined that the features determined using the method of Figure 5 and/or at 407 are suitable for detecting malicious and non-malicious applications in the input dataset of applications.

An anomaly score of an application may comprise an indication of how much of an outlier an application is among applications in a dataset. An application that has feature values that are more anomalous (further from average features values) within the dataset will have a higher anomaly score. An application that has feature values that are less anomalous within the dataset (closer to average feature values) will have a lower anomaly score. Applications that have a higher anomaly score are determined to be less normal than applications having a lower anomaly score. In most real-world datasets, this usually indicates that the application is more likely to be malicious, as there are normally more non-malicious applications than malicious applications in a dataset. To detect anomalous behaviour of an application and to determine an anomaly score for an application, any suitable anomaly detection method may be used. In some examples, an Isolation Forest algorithm may be used as an anomaly detection method. Isolation Forest is based on the Decision Tree algorithm. Isolation Forest isolates outliers by randomly selecting a feature from a given set of features and then randomly selecting a split value between the max and min values of that feature. This random portioning of features produces shorter paths in trees for the anomalous data points, thus detecting them from the rest of the data. Applications having shorter paths in decision trees are therefore assigned higher anomaly scores.

The features used to train, validate and test the classification model at 723 to 729 comprise: the AppID input at 721; the feature values for each AppID input at 721; the feature values for each of the nearest three neighbouring applications for each ApplD; and the anomaly score for each of the nearest three neighbouring applications for each ApplD.

At 723, the data input at 721 is split into training data, validation data and test data. The split may be performed to spend a suitable amount of time on each of the training, validation and testing phases. For example, training could be performed for 60% of the available time for supervised learning, validation could be performed for 20% of the available time for supervised learning and testing could be performed for 20% of the available time for supervised learning. It will be understood that other ratios may be used.

At 725, a classification model for the applications may be trained using the training data. The output of the classification model (determination if the application is malicious or non-malicious) can be compared to the labels of the training data, and the parameters of the classification model can be adjusted to optimized performance.

The classification model can be adjusted by optimizing performance on the validation data to provide a model at 727 for predicting whether an application is malicious or non-malicious.

At 727, test data can be input into the model trained on the training data and optimized on the validation data. The recall of the trained model of 727 can be calculated at 729 as the ratio of the number of true positives to the number of anything that should have been identified as positive. So, in the example of Figure 7A, the recall is determined as the number of malicious applications correctly identified as malicious in the test data divided by the number of malicious applications in the test data. The FPR can also be determined at 729. The FPR is calculated as the ratio between the number of negative events wrongly categorized as positive (false positives) and the total number of actual negative events (regardless of classification). So, in the example of Figure 7A, the FPR is determined as the number of non-malicious applications in the test data determined as malicious applications divided by the total number of non-malicious applications in the test data.

The entities used to identify malicious and non-malicious applications can be varied until an acceptable recall and FPR is achieved. Acceptable recall and FPR may vary.

In the example discussed above of differentiating malicious and non-malicious applications with single entity linkage, with K=3 and entities used comprising Publisher Domain, Tenant ID and Redirect URL, recall of 100% with an FPR of 1% has been achieved.

Figure 7B shows a method of using a classification model 725 to determine if an application is malicious or not. At 780, data of an application is input into classification model 725. In the example of Figure 7B, the classification model 725 is the same as classification model as used in the method of Figure 7A. In other examples, other classification models may be used. Classification model 725 may be trained using any of the methods as described herein. The data input at 780 ay comprise, for example, features of an application and/or features of at least one neighbouring application(s).

At 782, if classification model 725 determines that the application is malicious (or has a probability of being malicious over a threshold probability), a cybersecurity mitigation action may be performed. In some examples, performing a cybersecurity mitigation action for an application may comprise at least one of the following:
- Preventing the application from operating on at least one device;
- Deleting the application from a device;
- Preventing the application from being downloaded by further devices (e.g., by removing an application from an application store);
- Reporting the application as malicious to a separate device;
- Sandboxing the application;
- Preventing entities related to the application (e.g., publisher, tenant, reply URL) from publishing further applications.;
- Issuing a warning notification indicating that the application is malicious to devices known to have downloaded the application.

Figure 8 shows a method for determining a reputation score or risk score for a primary entity of a model. The example of Figure 8 shows, as an example, publisher ID as the primary entity, but any other suitable primary entity could be used. In the example of Figure 8, a publisher domain model is therefore used but in other examples other primary entity models can be used. The classification model used in Figure 8 at 835 is based on primary entities. The same applications (AppIDs) can be used in the datasets input into the method of Figure 8 and Figure 7A. However, interaction data (behavioural data) is removed from the input dataset for Figure 8. As such, data input into the method of Figure 8 may comprise a subset of the data input into Figure 7A, where the subset comprises only the data available at the launch (zero-day data) for each of the applications in the data input into Figure 7A.

At 831, for an input set of data, applications with single linkage via the publisher domain with the closest neighbouring application are considered. The nearest neighbor of each AppID is determined based on angular distance in a feature space. If, in a graph representing the applications of input data, AppID has a single linkage via publisher domain to the nearest neighbouring application, the AppID and the features of AppID X, as well as the features of the K nearest neighbours of ApplDs (Neighbouring ApplD-1,2,3 where K=3 in this example) and the anomaly risk score of the K nearest neighbouring ApplD-1,2,3, are used at 835. If a neighbouring application of an AppID according to angular distance in a feature space is not connected by a single linkage via publisher domain to the AppID, then the neighbouring application is not included in the dataset of 831.

At 835, the information determined at 831 is input into a classification model. The classification model determines if a particular ApplID is malicious or non-malicious. The classification model selected at 835 is capable of outputting relative feature importance for features input into the model. The relative feature importance for each feature may be determined using any known method by the classification model of 835. For example, the classification model may use a Random Forest algorithm and may leverage built-in feature importance in the Random Forest algorithm, for example by determining Gini importance (otherwise known as mean decrease impurity) or mean decrease accuracy. In other examples, the classification model may output relative feature importance using permutation-based feature importance. In other examples, feature importance may be calculated using SHAP values.

At 835, the classification model is validated and tested using labelled data (the labels indicating whether each application is malicious or benign). If the classification model meets the validation and test requirements, it is determined at 835 that the classification model is suitable for determining relative feature importance for the data input at 831. If the classification model does not meet the validation and test requirements, the classification model can be altered. This may include, for example: selecting a different algorithm capable of outputting relative feature importance to use for the classification model; changing the value of K; changing the features used in the classification model; reperforming 729 with higher recall requirements and/or lower FPR requirements.

A feature map 832 that may be input at 831 is shown in Table 2. In this example, K=3 and therefore feature values in a feature space for three nearest neighbouring applications of each AppID are present in the feature map. The features selected in this example are Publisher ID, URL and Tenant ID, although it should be noted that in other examples other features may be used. In some examples, anomaly risk score may also be used as a feature. Each feature used in feature map 832 is available at the release of an application (i.e., is not a behavioural or interaction feature of an application).

**Table 2: A feature map with feature values for App IDs X and Y. Dots represent one or more further values that may be included in other examples. In this example, K=3 and n=3.**

| | **Neighbouring App 1** | | | **Neighbouring App 2** | | | **Neighbouring App 3** | | |
|---|---|---|---|---|---|---|---|---|---|
| **AppID** | **Publisher** | **URL** | **Tenant** | **Publisher** | **URL** | **Tenant** | **Publisher** | **URL** | **Tenant** |
| X | A | J | M | B | K | M | B | J | N |
| Y | B | K | N | A | L | M | A | J | M |
| · | · | · | · | · | · | · | · | · | · |

As there are K nearest neighbours and n features (primary entities) for each application in feature map 832, in total there are K x n features in the feature map. Each of these features is described in the left-hand column of 834. In this example n=3 and *K*=3, so there are nine features. Each feature can be assigned a feature ID.

Feature map 832 can be ordered in a repeating pattern so that a primary entity value of different neighbouring application repeats with a periodicity of n over sequential features identifiers in the feature map. For example, in feature map 832, n=3 and the primary entity values of Neighbouring Apps 1, 2 and 3 for Publisher ID are at Feature IDs 1, 4 and 7 respectively; the primary entity values of Neighbouring Apps 1, 2 and 3 for reply URL are at Feature IDs 2, 5 and 8 respectively; the primary entity values of Neighbouring Apps 1, 2 and 3 for Tenant ID are at Feature IDs 3, 6 and 9 respectively. The Feature IDs in feature map 832 (shown in Table 3) of similar primary entity types of Neighbouring Apps 1, 2 and 3 are separated by n.

**Table 3: Normalized feature importance values for each Feature ID in Table 2.**

| **Description** | **Feature ID** | **Feature Importance** |
|---|---|---|
| Neighbouring App 1's Publisher | 1 | 0.3 |
| Neighbouring App 1's URL | 2 | 0.05 |
| Neighbouring App 1's Tenant ID | 3 | 0.1 |
| Neighbouring App 2's Publisher | 4 | 0.1 |
| Neighbouring App 2's URL | 5 | 0.2 |
| Neighbouring App 2's Tenant ID | 6 | 0.05 |
| Neighbouring App 3's Publisher | 7 | 0.1 |
| Neighbouring App 3's URL | 8 | 0.05 |
| Neighbouring App 3's Tenant ID | 9 | 0.05 |

At 837, after the classification model of 835 is tested and validated, the relative feature importance for each of the *K* neighbouring application for each primary entity in the model of 835 is determined. Exemplary results are shown in Table 3. This provides relative feature importance values for each Feature ID in feature map 832, as shown at 834. These feature values may be normalized to provide a feature importance value between 0 and 1 for each feature ID. After normalization, the sum of all the feature importance values over the K x n feature IDs is 1.0.

At 839, for each application (each App ID) a reputation score of the application may be used. A reputation score (where a high reputation score indicates a low probability of maliciousness of the application) may be determined using any suitable method. In some examples, the reputation score for each App ID may be determined as an output from the classification model 725. In some examples, the reputation score for each App ID may be determined based on an anomaly score of the application.

At 839, for each App ID the product of the App ID's reputation score and the relative feature importance of each Feature Id is determined. So, for example, if App ID X in Table 3 has a reputation score of 0.9, each of the feature importance values for each Feature ID of App ID X would be multiplied by 0.9. This process can be repeated at 841 for each App ID in data 831, where each App ID will have a different reputation score, but will have the same relative feature importance values for each feature ID.

**Table 4: Assuming in this example that App ID X has a reputation score of 0.9, the right-hand column shows a product of the relative feature importance of Table 3 and the reputation score of App ID X. Similar information can be determined for each AppID of data 831.**

| **Description** | **Feature ID** | **Value for App ID X** | **Product of feature importance and application reputation score of 0.9** |
|---|---|---|---|
| Neighbouring App 1's Publisher | 1 | A | 0.27 |
| Neighbouring App 1's URL | 2 | J | 0.045 |
| Neighbouring App 1's Tenant ID | 3 | M | 0.09 |
| Neighbouring App 2's Publisher | 4 | B | 0.09 |
| Neighbouring App 2's URL | 5 | K | 0.18 |
| Neighbouring App 2's Tenant ID | 6 | M | 0.045 |
| Neighbouring App 3's Publisher | 7 | B | 0.09 |
| Neighbouring App 3's URL | 8 | J | 0.045 |
| Neighbouring App 3's Tenant ID | 9 | N | 0.045 |

At 843, the product values of feature importance and application reputation score are aggregated over similar primary entity values for each App ID. Continuing the example above, Table 4 shows the aggregate of product values of feature importance and application reputation score for App ID X. In this example, the product values are aggregated by summing, but in other examples other aggregation methods may be used.

**Table 5: Aggregate of product values of App ID X for primary entity values of App ID X.**

| **Primary Entity value** | **Aggregate of product values of feature Importance and application reputation score for App ID X** |
|---|---|
| Publisher A | 0.27 |
| Publisher B | 0.09 + 0.09 = 0.18 |
| URL J | 0.045 + 0.045 = 0.09 |
| URL K | 0.18 |
| Tenant ID M | 0.09 + 0.045 = 0.135 |
| Tenant ID N | 0.045 |

The aggregation of 843 can be repeated for each AppID (i.e., the same method may be repeated for AppID Y and other App IDs present in 831).

At 845, the method comprises aggregating, for a particular value of a primary entity, all of the aggregates of the product values at AppID level. For example, all of the product values of Publisher ID B are aggregated over the ApplDs. This provides a reputation score for Publisher ID B (note that this reputation score may need to be normalized by e.g., dividing by the number of AppIDs where Publisher ID B is a feature value for the AppID or any of the K neighbouring applications).

The process of Figure 8 can be repeated for each primary entity value to provide a reputation score of each primary entity value in the dataset of 831.

Although Figure 8 refers to reputation scores, the same process can be performed with "risk scores", where a higher risk score correlates to a lower reputation score.

Figure 8 can be repeated for other primary entities in a classification model. For example, Figure 8 can be repeated for: Redirect URL instead of publisher ID; Tenant ID instead of Publisher ID, etc.

Figure 8 can be repeated for all primary entities selected at 407 of Figure 4, to provide reputation scores for each value in the input data of each primary entity.

Figure 9A shows a method for providing a classification model for newly released applications. The classification model can be used to classify applications that are newly released (i.e., from a cold start), as the classification model is only based on primary entities. It will be understood of course, that the classification model of Figure 9A could be used to classify other applications that are not newly released.

In the example of Figure 9A, publisher domain, tenant ID and Redirect URL are used as primary entities, but in other examples other suitable primary entities may be used.

At 949, input data comprising applications is provided. At 951, for each application in the input data of 949 a publisher domain, a tenant ID and a redirect URL are retrieved.

At 953, a reputation score is looked up for each of the publisher domain, tenant ID and redirect URL for each ApplD. For example, if a ApplD=X has a publisher domain A, tenant ID X and redirect URL i), and the reputation score for domain A is "good", the reputation score for tenant ID X is "Very bad" and the reputation score for redirect URL i) is "Average", AppID = X will have the following reputation score list: (Reputation score of domain = Good, Reputation score of tenant ID = Very bad, Reputation score of redirect URL = Average). In some examples, the reputation scores may be provided as values between 0 and 1. The reputation scores for each primary entity value may be determined as described above with respect to Figure 8.

At 953, for each AppID in the input data at 949, a reputation score list is determined. The AppID is also labelled with a flag indicating if the AppID is malicious or not.

The data determined at 959 is then used to train a classification model Pr(Is_Malicious) provided at 960 using a supervised learning approach. The classification model is trained based on the AppID labelled with the flag indicating if the application is malicious or not and the reputation score list for each application. The ground truth for the supervised learning may be the flag indicating if the application if the application is malicious or not, and the inputs may comprise the ApplDs, primary entities and primary entity reputation scores.

Figure 9B shows a method for determining a probability that an application is malicious. The method of Figure 9B can be used for newly released applications, as it uses primary entities to determine the probability of a malicious application.

At 961, an application is received having primary entity values as used in classification model Pr(Is_Malicious). In this example, the primary entities comprise the publisher domain of the application, the tenant ID of the application and the redirect URL of the application.

At 963, a reputation score for each entity is looked up for the application.

At 965, the reputation score for each entity is input into the classification model Pr(Is_Malicious), thereby resulting in an output value for a probability that the application is malicious at 967.

If the output at 967 indicates that the application is malicious (or has a probability of being malicious over a probability threshold, then at 969 a cybersecurity mitigation action may be performed for the application. In some examples, performing a cybersecurity mitigation action for an application may comprise at least one of the following: preventing the application from operating on at least one device; deleting the application from a device; Preventing the application from being downloaded by further devices (e.g., by removing an application from an application store); reporting the application as malicious to a separate device; sandboxing the application; preventing entities related to the application (e.g., publisher, tenant, reply URL) from publishing further applications.; issuing a warning notification indicating that the application is malicious to devices known to have downloaded the application. According to some examples, different cybersecurity mitigation actions may be performed at different maliciousness probability levels.

Some examples as described herein use a graph-based Al method for determining linkages between entities of an application. By using a graph, linkages between the applications and the entities related to the applications that may not otherwise be determined using known machine learning methods are detected. This can be used to reduce a number of compute cycles needed to identify an application as malicious.

Some examples as described herein are capable of detecting new (zero-day) campaigns) as they use primary entities to classify applications as malicious, without relying upon interaction/behavioural/activity data of the applications. These primary entities are available at the release of new applications.

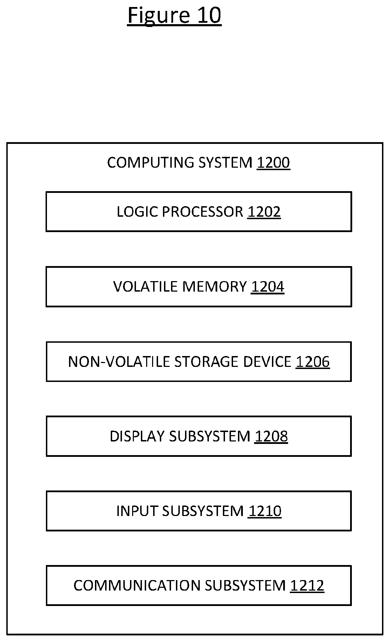

FIG. 10 schematically shows a non-limiting example of a computing system 1200, such as a computing device or system of connected computing devices, that can enact one or more of the methods or processes described above. Computing system 1200 is shown in simplified form. Computing system 1200 includes a logic processor 1202, volatile memory 1204, and a non-volatile storage device 1206. Computing system 1200 may optionally include a display subsystem 1208, input subsystem 1210, communication subsystem 1212, and/or other components not shown in FIG. 10. Logic processor 1202 comprises one or more physical (hardware) processors configured to carry out processing operations. For example, the logic processor 1202 may be configured to execute instructions that are part of one or more applications, programs, routines, libraries, objects, components, data structures, or other logical constructs. The logic processor 1202 may include one or more hardware processors configured to execute software instructions based on an instruction set architecture, such as a central processing unit (CPU), graphical processing unit (GPU) or other form of accelerator processor. Additionally or alternatively, the logic processor 1202 may include a hardware processor(s)) in the form of a logic circuit or firmware device configured to execute hardware-implemented logic (programmable or non-programmable) or firmware instructions. Processor(s) of the logic processor 1202 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor 1202 may be virtualized and executed by remotely accessible, networked computing devices configured in a cloud-computing configuration. In such a case, these virtualized aspects are run on different physical logic processors of various different machines. Non-volatile storage device 1206 includes one or more physical devices configured to hold instructions executable by the logic processor 1202 to implement the methods and processes described herein. When such methods and processes are implemented, the state of non-volatile storage device 1206 may be transformed - e.g., to hold different data. Non-volatile storage device 1206 may include physical devices that are removable and/or built-in. Non-volatile storage device 1206 may include optical memory (e g., CD, DVD, HD-DVD, Blu-Ray Disc, etc.), semiconductor memory (e g., ROM, EPROM, EEPROM, FLASH memory, etc.), and/or magnetic memory (e.g., hard-disk drive), or other mass storage device technology. Non-volatile storage device 1206 may include nonvolatile, dynamic, static, read/write, read-only, sequential-access, location-addressable, file-addressable, and/or content-addressable devices. Volatile memory 1204 may include one or more physical devices that include random access memory. Volatile memory 1204 is typically utilized by logic processor 1202 to temporarily store information during processing of software instructions. Aspects of logic processor 1202, volatile memory 1204, and non-volatile storage device 1206 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example. The terms "module," "program," and "engine" may be used to describe an aspect of computing system 1200 typically implemented in software by a processor to perform a particular function using portions of volatile memory, which function involves transformative processing that specially configures the processor to perform the function. Thus, a module, program, or engine may be instantiated via logic processor 1202 executing instructions held by non-volatile storage device 1206, using portions of volatile memory 1204. Different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc. When included, display subsystem 1208 may be used to present a visual representation of data held by non-volatile storage device 1206. The visual representation may take the form of a graphical user interface (GUI). As the herein described methods and processes change the data held by the non-volatile storage device, and thus transform the state of the non-volatile storage device, the state of display subsystem 1208 may likewise be transformed to visually represent changes in the underlying data. Display subsystem 1208 may include one or more display devices utilizing virtually any type of technology. Such display devices may be combined with logic processor 1202, volatile memory 1204, and/or non-volatile storage device 1206 in a shared enclosure, or such display devices may be peripheral display devices. When included, input subsystem 1210 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor. When included, communication subsystem 1212 may be configured to communicatively couple various computing devices described herein with each other, and with other devices. Communication subsystem 1212 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 1200 to send and/or receive messages to and/or from other devices via a network such as the internet. The term computer readable media as used herein may include computer storage media. Computer storage media may include volatile and non-volatile, removable and nonremovable media (e.g., volatile memory 1204 or non-volatile storage 1206) implemented in any method or technology for storage of information, such as computer readable instructions, data structures, or program modules. Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by a computing device (e.g. the computing system 1200 or a component device thereof). Computer storage media does not include a carrier wave or other propagated or modulated data signal. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct wired connection, and wireless media such as acoustic, radio frequency (RF), infrared, and other wireless media.

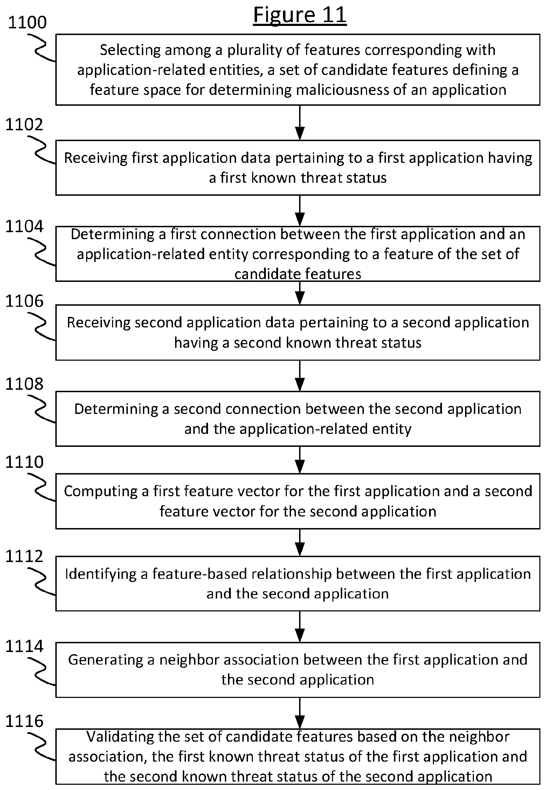

Figure 11 shows an example method flow for determining a set of features suitable for determining maliciousness of an application. In some examples, the set of features or a subset of the set of features may then be used as a feature space in which to train a threat detection model.

At 1100, a set of candidate features is selected among a plurality of features corresponding with application-related entities. The set of candidate feature defines a feature space for determining maliciousness of an application. The application-related entities may be measurements of one or more application features, for example one or more of: publisher ID, tenant ID, reply URL, etc. At 1102, first application data pertaining to a first application having a first known threat status is received. At 1104, a first connection between the first application and an application-related entity corresponding to a feature of the set of candidate features is determined. The connection may be a single linkage as shown for example in Figure 6.

At 1106, second application data pertaining to a first second having a second known threat status is received. At 1108, a second connection between the second application and an application-related entity corresponding to a feature of the set of candidate features is determined. The connection may be a single linkage as shown for example in Figure 6.

At 1110, the method comprises: computing using the first application data a first feature vector comprising values of the candidate features for the first application; and computing using the second application data a second feature vector comprising values of the candidate features for the second application. At 1112, a feature-based relationship between the first application and the second application is identified based on a distance metric applied to the first feature vector and the second feature vector in the feature space of the first feature vector and the second feature vector. The feature-based relationship may be a k-nearest neighbour relationship as discussed above.

At 1114, a neighbor association is generated between the first application and the second application based on: the first connection between the first application and the application-related entity, the second connection between the second application and the application-related entity, and the feature-based relationship identified between the first application and the second application. At 1116, the method comprises validating the set of candidate features based on the neighbor association, the first known threat status of the first application and the second known threat status of the second application. If malicious applications mostly have a neighbour relationship, and if non-malicious applications mostly have a neighbour relationship, the set of candidate features is determined to be valid. The method of Figure 11 may be repeated for a plurality of first applications and second applications.

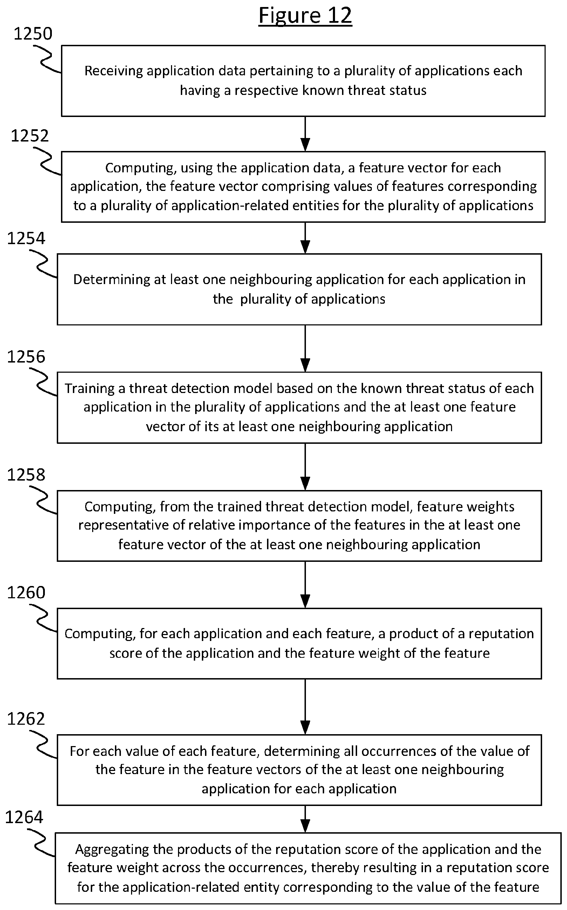

Figure 12 shows an example method flow for determining a reputation score of an application-related entity.

At 1250, the method comprises receiving application data pertaining to a plurality of applications each having a respective known threat status. At 1252, using the application data, a feature vector for each application, the feature vector comprising values of features corresponding to a plurality of application-related entities for the plurality of applications is computed. At 1254, at least one neighbouring application for each application in the plurality of application is determined. K neighbouring applications may be determined at 1254. At 1256, the method comprises training a threat detection model based on the known threat status of each application in the plurality of applications and the at least one feature vector of its at least one neighbouring application.

At 1258, the method comprises computing, from the trained threat detection model, feature weights representative of relative importance of the features in the at least one feature vector of the at least one neighbouring application. At 1260, the method comprises computing, for each application and each feature, a product of a reputation score of the application and the feature weight of the feature. At 1262, for each value of each feature, the method comprises determining all occurrences of the value of the feature in the feature vectors of the at least one neighbouring application for each application. At 1264, the method comprises aggregating the products of the reputation score of the application and the feature weight across the occurrences, thereby resulting in a reputation score for the application-related entity corresponding to the value of the feature. The reputation score can be used to train a threat detection model to predict maliciousness of zero-day applications.

According to a first aspect, there is provided a method comprising: selecting among a plurality of features corresponding with application-related entities, a set of candidate features defining a feature space for determining maliciousness of an application; receiving first application data pertaining to a first application having a first known threat status; determining a first connection between the first application and an application-related entity corresponding to a feature of the set of candidate features; receiving second application data pertaining to a second application having a second known threat status; determining a second connection between the second application and the application-related entity; computing using the first application data a first feature vector comprising values of the candidate features for the first application; computing using the second application data a second feature vector comprising values of the candidate features for the second application; identifying a feature-based relationship between the first application and the second application based on a distance metric applied to the first feature vector and the second feature vector in the feature space of the first feature vector and the second feature vector; generating a neighbor association between the first application and the second application based on: the first connection between the first application and the application-related entity, the second connection between the second application and the application-related entity, and the feature-based relationship identified between the first application and the second application; and validating the set of candidate features based on the neighbor association, the first known threat status of the first application and the second known threat status of the second application.

According to some examples, the method comprises performing a cybersecurity mitigation action based on the set of candidate features.

According to some examples, the set of candidate features is determined to be invalid, and the method comprises: selecting among the plurality of features corresponding with application-related entities, a modified set of candidate features defining a modified feature space for determining maliciousness of an application; computing a modified first feature vector of the first application in the modified feature space; computing a modified second feature vector of the second application in the modified feature space; identifying a second feature-based relationship between the first application and the second application based on a second distance metric applied to the modified first feature vector and the modified second feature vector in the modified feature space of the modified first feature vector and the modified second feature vector; generating a neighbor association between the first application and the second application based on: the first connection between the first application and the application-related entity, the second connection between the second application and the application-related entity, and the second feature-based relationship identified between the first application and the second application; and validating the modified set of candidate features based on the neighbor association, the first known threat status of the first application and the second known threat status of the second application.

According to some examples, the set of candidate features is determined to be valid, and the method comprises: training a threat detection model using values of the set of candidate features and known threat statuses of a plurality of applications.

According to some examples, the method comprises: validating the threat detection model; determining the threat detection model to be invalid; selecting among the plurality of features corresponding with application-related entities, a modified set of candidate features defining a modified feature space for determining maliciousness of an application.

According to some examples, the set of candidate features is determined to be valid, and the method comprises: validating the threat detection model; determining the threat detection model to be valid; computing using third application data a third feature vector comprising values of the candidate features for a third application; using the trained threat detection model to predict a threat status of the third application based on the third feature vector.

According to some examples, the method comprises performing a cybersecurity mitigation action based on the predicted threat status of the third application.

According to some examples, the method comprises: receiving fourth application data pertaining to a plurality of applications each having a respective known threat status and computing, using the fourth application data, a feature vector for each application in the fourth application data, the feature vector comprising values of features corresponding to a plurality of application-related entities, wherein each application-related entity of the plurality of application-related entities corresponds with at least one feature of the set of candidate features;
determining at least one neighbouring application for each application in the fourth application data; training a second threat detection model based on the known threat status of each application in the fourth application data and the at least one feature vector of its at least one neighbouring application; computing, from the trained second threat detection model, feature weights representative of relative importance of the features in the at least one feature vector of the at least one neighbouring application; computing, for each application and each feature in the fourth application data, a product of a reputation score of the application and the feature weight of the feature; for each value of each feature, determining all occurrences in the fourth application data of the value of the feature in the feature vectors of the at least one neighbouring application for each application; and aggregating the products of the reputation score of the application and the feature weight across the occurrences in the fourth application data, thereby resulting in a reputation score for the application-related entity corresponding to the value of the feature.

According to some examples, the method comprises training a third threat detection model to predict if an application is malicious or not based on the known threat status of each application in a second plurality of applications and on the reputation score for each application-related entity of each application in the second plurality of applications.

According to some examples, the method comprises: receiving further application data pertaining to a further application; determining a reputation score for each of at least one application-related entity in the further application data; inputting the reputation score for each of the at least one application-related entity into the trained second threat detection model to predict if the further application is malicious or not.

According to some examples, the plurality of application-related entities is measurable at release of an application.

According to some examples, the reputation score of the application is determined using an anomaly score of the application within the plurality of applications.

According to some examples, the reputation score of the application is determined using a third threat detection model.

According to a second aspect, there is provided a computer device comprising: a processing unit; a memory coupled to the processing unit and configured to store executable instructions which, upon execution by the processing unit, are configured to cause the processing unit to: select among a plurality of features corresponding with application-related entities, a set of candidate features defining a feature space for determining maliciousness of an application; receive first application data pertaining to a first application having a first known threat status; determine first connection between the first application and an application-related entity corresponding to a feature of the set of candidate features; receive second application data pertaining to a second application having a second known threat status; determine a second connection between the second application and the application-related entity; compute using the first application data a first feature vector comprising values of the candidate features for the first application; compute using the second application data a second feature vector comprising values of the candidate features for the second application; identify a feature-based relationship between the first application and the second application based on a distance metric applied to the first feature vector and the second feature vector in the feature space of the first feature vector and the second feature vector; generate a neighbor association between the first application and the second application based on: the first connection between the first application and the application-related entity, the second connection between the second application and the application-related entity, and the feature-based relationship identified between the first application and the second application; and validate the set of candidate features based on the neighbor association, the first known threat status of the first application and the second known threat status of the second application.

According to some examples, the executable instructions upon execution by the processing unit are configured to cause the processing unit to perform the steps of any of the examples of the first aspect.

According to a third aspect there is provided a computer-readable storage device comprising instructions executable by a processor for: selecting among a plurality of features corresponding with application-related entities, a set of candidate features defining a feature space for determining maliciousness of an application; receiving first application data pertaining to a first application having a first known threat status; determining a first connection between the first application and an application-related entity corresponding to a feature of the set of candidate features; receiving second application data pertaining to a second application having a second known threat status; determining a second connection between the second application and the application-related entity; computing using the first application data a first feature vector comprising values of the candidate features for the first application; computing using the second application data a second feature vector comprising values of the candidate features for the second application; identifying a feature-based relationship between the first application and the second application based on a distance metric applied to the first feature vector and the second feature vector in the feature space of the first feature vector and the second feature vector; generating a neighbor association between the first application and the second application based on: the first connection between the first application and the application-related entity, the second connection between the second application and the application-related entity, and the feature-based relationship identified between the first application and the second application; and validating the set of candidate features based on the neighbor association, the first known threat status of the first application and the second known threat status of the second application.

According to some examples, the instructions may be executable by a processor for performing and of the examples of the first aspect.

According to a fourth aspect there is provided a method comprising: receiving application data pertaining to a plurality of applications each having a respective known threat status; computing a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features; determining at least one neighbouring application for each application in the plurality of applications; training a threat detection model based on the known threat status of each application in the plurality of applications and at least one feature vector of its at least one neighbouring application, wherein the plurality of feature vectors comprises the at least one feature vector; computing, from the trained threat detection model, feature weights representative of relative importance of the features in the at least one feature vector of the at least one neighbouring application; computing, for each application and each feature, a product of a reputation score of the application and the feature weight of the feature; for each value of each feature, determining all occurrences of the value of the feature in the feature vectors of the at least one neighbouring application for each application; and aggregating the products of the reputation score of the application and the feature weight across the occurrences, thereby resulting in a reputation score for the application-related entity corresponding to the value of the feature.

According to some examples, the method comprises: performing a cybersecurity mitigation action based on the reputation score for the application-related entity.

According to some examples, the method comprises: training a second threat detection model to predict if an application is malicious or not based on the known threat status of each application in a second plurality of applications and on the reputation score for each application-related entity of each application in the second plurality of applications.

According to some examples, the method comprises: receiving further application data pertaining to a first application; determining a reputation score for each of at least one application-related entity of the first application; inputting the reputation score for each of the at least one application-related entity into the trained second threat detection model to predict if the first application is malicious or not.

According to some examples, the first application is predicted to be malicious, and the method comprises: performing a cybersecurity mitigation action for the first application.

According to some examples, the plurality of application-related entities is measurable at release of an application.

According to some examples, the reputation score of the application is determined using an anomaly score of the application within the plurality of applications.

According to some examples, the method comprises: the reputation score of the application is determined using a third threat detection model.

According to some examples, the determining the at least one neighbouring application for each application in the plurality of applications comprises, for each application: determining a connection between the application and a first application-related entity; determining at least one other application in the plurality of applications that has a connection to the first application-related entity; computing a distance metric between the feature vector of the application and the feature vector of each of at least one other application; determining, based on the at least one computed distance metric, a predetermined number of the at least one other application that are closest to the feature vector of the application as the at least one neighbouring application.

According to some examples, the method comprises: selecting among a plurality of features corresponding with application-related entities, a set of candidate features defining a feature space for determining application maliciousness; receiving second application data pertaining to a second application having a second known threat status; determining a second connection between the second application and a second application-related entity corresponding to a feature of the set of candidate features; receiving third application data pertaining to a third application having a third known threat status; determining a third connection between the third application and the second application-related entity; computing using the second application data a second feature vector comprising values of the candidate features for the second application; computing using the third application data a third feature vector comprising values of the candidate features for the third application; identifying a feature-based relationship between the second application and a third application based on a distance metric applied to the second feature vector and the third feature vector in the feature space of the candidate features; generating a neighbor association between the second application and the third application based on: the second connection between the second application and the second application-related entity, the third connection between the third application and the second application-related entity, and the feature-based relationship identified between the second application and the third application; and validating the set of candidate features based on the neighbor association, the second known threat status of the second application and the third known threat status of the third application.

According to some examples, the set of candidate features is determined to be valid, and the method comprises: using the set of candidate features to define a feature space for the feature vector of each application in the application data pertaining to the plurality of applications.

According to some examples, the set of candidate features is determined to be invalid, and the method comprises: selecting among the plurality of features corresponding with application-related entities, a modified set of candidate features defining a modified feature space for determining maliciousness of an application; computing a modified second feature vector of the second application in the modified feature space; computing a modified third feature vector of the third application in the modified feature space; identifying a second feature-based relationship between the second application and the third second application based on a second distance metric applied to the modified second feature vector and the modified third feature vector in the modified feature space of the modified feature space; generating a neighbor association between the second application and the third application based on: the second connection between the second application and the second application-related entity, the third connection between the second application and the second application-related entity, and the second feature-based relationship identified between the second application and the third application; and validating the modified set of candidate features based on the neighbor association, the second known threat status of the second application and the third known threat status of the third application.

According to some examples, the method comprises: the plurality of application-related entities comprises at least one of: a publisher identifier; a tenant identifier; a reply Uniform Resource Locator (URL).

According to a fifth aspect, there is provided a computer device comprising: a processing unit; a memory coupled to the processing unit and configured to store executable instructions which, upon execution by the processing unit, are configured to cause the processing unit to: receive application data pertaining to a plurality of applications each having a respective known threat status and computing a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features; determine at least one neighbouring application for each application in the plurality of applications; train a threat detection model based on the known threat status of each application in the plurality of applications and at least one feature vector of its at least one neighbouring application, wherein the plurality of feature vectors comprises the at least one feature vector; compute, from the trained threat detection model, feature weights representative of relative importance of the features in the at least one feature vector of the at least one neighbouring application; compute, for each application and each feature, a product of a reputation score of the application and the feature weight of the feature; for each value of each feature, determine all occurrences of the value of the feature in the feature vectors of the at least one neighbouring application for each application; and aggregate the products of the reputation score of the application and the feature weight across the occurrences, thereby resulting in a reputation score for the application-related entity corresponding to the value of the feature.

According to some examples, the executable instructions upon execution by the processing unit are configured to cause the processing unit to perform the steps of any of the examples of the fourth aspect.

According to a sixth aspect, there is provided a computer-readable storage device comprising instructions executable by a processor for: receiving application data pertaining to a plurality of applications each having a respective known threat status and computing a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features; determining at least one neighbouring application for each application in the plurality of applications; training a threat detection model based on the known threat status of each application in the plurality of applications and at least one feature vector of its at least one neighbouring application, wherein the plurality of feature vectors comprises the at least one feature vector; computing, from the trained threat detection model, feature weights representative of relative importance of the features in the at least one feature vector of the at least one neighbouring application; computing, for each application and each feature, a product of a reputation score of the application and the feature weight of the feature; for each value of each feature, determining all occurrences of the value of the feature in the feature vectors of the at least one neighbouring application for each application; and aggregating the products of the reputation score of the application and the feature weight across the occurrences, thereby resulting in a reputation score for the application-related entity corresponding to the value of the feature.

According to some examples, the instructions may be executable by a processor for performing and of the examples of the fourth aspect.

According to a seventh aspect there is provided a method comprising: receiving first application data pertaining to a first application having a first known threat status; determining a first connection between the first application and an application-related entity; receiving second application data pertaining to a second application having a second known threat status; determining a second connection between the second application and the application-related entity; computing using the first application data a first feature vector of the first application; computing using the second application data a second feature vector of the second application; identifying a feature-based relationship between the first application and a second application based on a distance metric applied to the first feature vector and the second feature vector in a feature space of the first feature vector and the second feature vector; generating a neighbor association between the first application and the second application based on: the first connection between the first application and the application-related entity, the second connection between the second application and the application-related entity, and the feature-based relationship identified between the first application and the second application; and validating the neighbor association based on the first known threat status of the first application and the second known threat status of the second application.

According to an eighth aspect there is provided a computer device comprising: a processing unit; a memory coupled to the processing unit and configured to store executable instructions which, upon execution by the processing unit, are configured to cause the processing unit to: receive first application data pertaining to a first application having a first known threat status; determine a first connection between the first application and an application-related entity; receive second application data pertaining to a second application having a second known threat status; determine a second connection between the second application and the application-related entity; compute using the first application data a first feature vector of the first application; compute using the second application data a second feature vector of the second application; identify a feature-based relationship between the first application and a second application based on a distance metric applied to the first feature vector and the second feature vector in a feature space of the first feature vector and the second feature vector; generate a neighbor association between the first application and the second application based on: the first connection between the first application and the application-related entity, the second connection between the second application and the application-related entity, and the feature-based relationship identified between the first application and the second application; and validate the neighbor association based on the first known threat status of the first application and the second known threat status of the second application.

According to a ninth aspect there is provided a computer-readable storage device comprising instructions executable by a processor for: receiving first application data pertaining to a first application having a first known threat status; determining a first connection between the first application and an application-related entity; receiving second application data pertaining to a second application having a second known threat status; determining a second connection between the second application and the application-related entity; computing using the first application data a first feature vector of the first application; computing using the second application data a second feature vector of the second application; identifying a feature-based relationship between the first application and a second application based on a distance metric applied to the first feature vector and the second feature vector in a feature space of the first feature vector and the second feature vector; generating a neighbor association between the first application and the second application based on: the first connection between the first application and the application-related entity, the second connection between the second application and the application-related entity, and the feature-based relationship identified between the first application and the second application; and validating the neighbor association based on the first known threat status of the first application and the second known threat status of the second application.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method comprising:
receiving (1250) application data pertaining to a plurality of applications each having a respective known threat status;
computing (1252) a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features;
determining (1254) at least one neighbouring application for each application in the plurality of applications;
training (1256) a threat detection model based on the known threat status of each application in the plurality of applications and at least one feature vector of its at least one neighbouring application, wherein the plurality of feature vectors comprises the at least one feature vector;
computing (1258), from the trained threat detection model, feature weights representative of relative importance of the features in the at least one feature vector of the at least one neighbouring application;
computing (1260), for each application and each feature, a product of a reputation score of the application and the feature weight of the feature;
for each value of each feature, determining (1262) all occurrences of the value of the feature in the feature vectors of the at least one neighbouring application for each application; and
aggregating (1264) the products of the reputation score of the application and the feature weight across the occurrences, thereby resulting in a reputation score for the application-related entity corresponding to the value of the feature.

2. The method of claim 1, comprising: performing a cybersecurity mitigation action (969) based on the reputation score for the application-related entity.

3. The method of claim 1 or claim 2, wherein the method comprises:
training a second threat detection model (960) to predict if an application is malicious or not based on the known threat status of each application in a second plurality of applications and on the reputation score for each application-related entity of each application in the second plurality of applications.

4. The method of claim 3, comprising:
receiving further application data pertaining to a first application;
determining a reputation score for each of at least one application-related entity of the first application;
inputting the reputation score for each of the at least one application-related entity into the trained second threat detection model to predict if the first application is malicious or not.

5. The method of claim 4, wherein the first application is predicted to be malicious, and wherein the method comprises:
performing a cybersecurity mitigation action (969) for the first application.

6. The method of any preceding claim, wherein the plurality of application-related entities are measurable for a newly released application.

7. The method of any preceding claim, wherein the reputation score of the application is determined using an anomaly score of the application within the plurality of applications.

8. The method of any preceding claim, wherein the reputation score of the application is determined using a third threat detection model.

9. The method of any preceding claim, wherein the determining the at least one neighbouring application for each application in the plurality of applications comprises, for each application:
determining a connection between the application and a first application-related entity;
determining at least one other application in the plurality of applications that has a connection to the first application-related entity;
computing a distance metric between the feature vector of the application and the feature vector of each of at least one other application;
determining, based on the at least one computed distance metric, a predetermined number of the at least one other application that are closest to the feature vector of the application as the at least one neighbouring application.

10. The method of any preceding claim, comprising:
selecting (1100) among a plurality of features corresponding with application-related entities, a set of candidate features defining a feature space for determining application maliciousness;
receiving (1102) second application data pertaining to a second application having a second known threat status;
determining (1104) a second connection between the second application and a second application-related entity corresponding to a feature of the set of candidate features;
receiving (1106) third application data pertaining to a third application having a third known threat status;
determining (1108) a third connection between the third application and the second application-related entity;
computing (1110) using the second application data a second feature vector comprising values of the candidate features for the second application;
computing (1110) using the third application data a third feature vector comprising values of the candidate features for the third application;
identifying (1112) a feature-based relationship between the second application and a third application based on a distance metric applied to the second feature vector and the third feature vector in the feature space of the candidate features;
generating (1114) a neighbor association between the second application and the third application based on: the second connection between the second application and the second application-related entity, the third connection between the third application and the second application-related entity, and the feature-based relationship identified between the second application and the third application; and
validating (1116) the set of candidate features based on the neighbor association, the second known threat status of the second application and the third known threat status of the third application.

11. The method according to claim 10, wherein the set of candidate features is determined to be valid, and the method comprises:
using the set of candidate features to define a feature space for the feature vector of each application in the application data pertaining to the plurality of applications.

12. The method according to claim 11, wherein the set of candidate features is determined to be invalid, and the method comprises:
selecting among the plurality of features corresponding with application-related entities, a modified set of candidate features defining a modified feature space for determining maliciousness of an application;
computing a modified second feature vector of the second application in the modified feature space;
computing a modified third feature vector of the third application in the modified feature space;
identifying a second feature-based relationship between the second application and the third second application based on a second distance metric applied to the modified second feature vector and the modified third feature vector in the modified feature space of the modified feature space;
generating a neighbor association between the second application and the third application based on: the second connection between the second application and the second application-related entity, the third connection between the second application and the second application-related entity, and the second feature-based relationship identified between the second application and the third application; and
validating the modified set of candidate features based on the neighbor association, the second known threat status of the second application and the third known threat status of the third application.

13. The method according to any preceding claim, wherein the plurality of application-related entities comprises at least one of:
a publisher identifier; a tenant identifier; a reply Uniform Resource Locator, URL.

14. A computer device (1200) comprising:
a processing unit (1202);
a memory (1204) coupled to the processing unit (1202) and configured to store executable instructions which, upon execution by the processing unit (1202), are configured to cause the processing unit (1202) to:
receive (1250) application data pertaining to a plurality of applications each having a respective known threat status and computing (1252) a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features;
determine (1254) at least one neighbouring application for each application in the plurality of applications;
train (1256) a threat detection model based on the known threat status of each application in the plurality of applications and at least one feature vector of its at least one neighbouring application, wherein the plurality of feature vectors comprises the at least one feature vector;
compute (1258), from the trained threat detection model, feature weights representative of relative importance of the features in the at least one feature vector of the at least one neighbouring application;
compute (1260), for each application and each feature, a product of a reputation score of the application and the feature weight of the feature;
for each value of each feature, determine (1262) all occurrences of the value of the feature in the feature vectors of the at least one neighbouring application for each application; and
aggregate (1264) the products of the reputation score of the application and the feature weight across the occurrences, thereby resulting in a reputation score for the application-related entity corresponding to the value of the feature.

15. A computer-readable storage device (1200) comprising instructions executable by a processor for:
receiving (1250) application data pertaining to a plurality of applications each having a respective known threat status and computing (1252) a plurality of feature vectors using the application data, the plurality of feature vectors comprising a feature vector for each application in the application data, the feature vector comprising values of features corresponding to a plurality of application-related entities for the plurality of applications, wherein each application-related entity of the plurality of application-related entities corresponds to a feature of the features;
determining (1254) at least one neighbouring application for each application in the plurality of applications;
training (1256) a threat detection model based on the known threat status of each application in the plurality of applications and at least one feature vector of its at least one neighbouring application, wherein the plurality of feature vectors comprises the at least one feature vector;
computing (1258), from the trained threat detection model, feature weights representative of relative importance of the features in the at least one feature vector of the at least one neighbouring application;
computing (1260), for each application and each feature, a product of a reputation score of the application and the feature weight of the feature;
for each value of each feature, determining (1262) all occurrences of the value of the feature in the feature vectors of the at least one neighbouring application for each application; and
aggregating (1264) the products of the reputation score of the application and the feature weight across the occurrences, thereby resulting in a reputation score for the application-related entity corresponding to the value of the feature.

## Patentansprüche

1. Verfahren, umfassend:
Empfangen (1250) von Anwendungsdaten, die sich auf eine Vielzahl von Anwendungen beziehen, die jeweils einen entsprechenden bekannten Bedrohungsstatus aufweisen;
Berechnen (1252) einer Vielzahl von Merkmalsvektoren unter Verwendung der Anwendungsdaten, wobei die Vielzahl von Merkmalsvektoren einen Merkmalsvektor für jede Anwendung in den Anwendungsdaten umfasst, wobei der Merkmalsvektor Werte von Merkmalen umfasst, die einer Vielzahl von anwendungsbezogenen Entitäten für die Vielzahl von Anwendungen entsprechen, wobei jede anwendungsbezogene Entität der Vielzahl von anwendungsbezogenen Entitäten einem Merkmal der Merkmale entspricht;
Bestimmen (1254) mindestens einer benachbarten Anwendung für jede Anwendung in der Vielzahl von Anwendungen;
Trainieren (1256) eines Bedrohungserkennungsmodells basierend auf dem bekannten Bedrohungsstatus jeder Anwendung in der Vielzahl von Anwendungen und mindestens einem Merkmalsvektor von ihrer mindestens einen benachbarten Anwendung, wobei die Vielzahl von Merkmalsvektoren den mindestens einen Merkmalsvektor umfasst;
Berechnen (1258), aus dem trainierten Bedrohungserkennungsmodell, von Merkmalsgewichtungen, die für eine relative Wichtigkeit der Merkmale in dem mindestens einen Merkmalsvektor der mindestens einen benachbarten Anwendung repräsentativ sind;
Berechnen (1260), für jede Anwendung und jedes Merkmal, eines Produkts aus einem Reputationswert der Anwendung und der Merkmalsgewichtung des Merkmals;
für jeden Wert jedes Merkmals, Bestimmen (1262) aller Vorkommen des Wertes des Merkmals in den Merkmalsvektoren der mindestens einen benachbarten Anwendung für jede Anwendung; und
Aggregieren (1264) der Produkte aus dem Reputationswert der Anwendung und der Merkmalsgewichtung über die Vorkommen, was dadurch zu einem Reputationswert für die anwendungsbezogene Entität führt, die dem Wert des Merkmals entspricht.

2. Verfahren nach Anspruch 1, umfassend: Durchführen einer Cybersicherheits-Abhilfemaßnahme (969) basierend auf dem Reputationswert für die anwendungsbezogene Entität.

3. Verfahren nach Anspruch 1 oder Anspruch 2, wobei das Verfahren umfasst:
Trainieren eines zweiten Bedrohungserkennungsmodells (960), um basierend auf dem bekannten Bedrohungsstatus jeder Anwendung in einer zweiten Vielzahl von Anwendungen und auf dem Reputationswert für jede anwendungsbezogene Entität jeder Anwendung in der zweiten Vielzahl von Anwendungen vorherzusagen, ob eine Anwendung bösartig ist oder nicht.

4. Verfahren nach Anspruch 3, umfassend:
Empfangen weiterer Anwendungsdaten, die sich auf eine erste Anwendung beziehen;
Bestimmen eines Reputationswerts für jede von mindestens einer anwendungsbezogenen Entität der ersten Anwendung;
Eingeben des Reputationswerts für jede der mindestens einen anwendungsbezogenen Entität in das trainierte zweite Bedrohungserkennungsmodell, um vorherzusagen, ob die erste Anwendung bösartig ist oder nicht.

5. Verfahren nach Anspruch 4, wobei vorhergesagt wird, dass die erste Anwendung bösartig ist, und wobei das Verfahren umfasst:
Durchführen einer Cybersicherheits-Abhilfemaßnahme (969) für die erste Anwendung.

6. Verfahren nach einem der vorstehenden Ansprüche, wobei die Vielzahl an anwendungsbezogenen Entitäten für eine neu veröffentlichte Anwendung messbar ist.

7. Verfahren nach einem der vorstehenden Ansprüche, wobei der Reputationswert der Anwendung unter Verwendung eines Anomaliewerts der Anwendung innerhalb der Vielzahl von Anwendungen bestimmt wird.

8. Verfahren nach einem der vorstehenden Ansprüche, wobei der Reputationswert der Anwendung unter Verwendung eines dritten Bedrohungserkennungsmodells bestimmt wird.

9. Verfahren nach einem der vorstehenden Ansprüche, wobei das Bestimmen der mindestens einen benachbarten Anwendung für jede Anwendung in der Vielzahl von Anwendungen für jede Anwendung umfasst:
Bestimmen einer Verbindung zwischen der Anwendung und einer ersten anwendungsbezogenen Entität;
Bestimmen mindestens einer anderen Anwendung in der Vielzahl von Anwendungen, die eine Verbindung zu der ersten anwendungsbezogenen Entität aufweist;
Berechnen einer Abstandsmetrik zwischen dem Merkmalsvektor der Anwendung und dem Merkmalsvektor jeder von mindestens einer anderen Anwendung;
Bestimmen, basierend auf der mindestens einen berechneten Abstandsmetrik, einer vorbestimmten Anzahl der mindestens einen anderen Anwendung, die dem Merkmalsvektor der Anwendung am nächsten sind, als die mindestens eine benachbarte Anwendung.

10. Verfahren nach einem der vorstehenden Ansprüche, umfassend:
Auswählen (1100), aus einer Vielzahl von Merkmalen, die anwendungsbezogenen Entitäten entsprechen, eines Satzes von Kandidatenmerkmalen, die einen Merkmalsraum zum Bestimmen einer Bösartigkeit einer Anwendung definieren;
Empfangen (1102) zweiter Anwendungsdaten, die sich auf eine zweite Anwendung mit einem zweiten bekannten Bedrohungsstatus beziehen;
Bestimmen (1104) einer zweiten Verbindung zwischen der zweiten Anwendung und einer zweiten anwendungsbezogenen Entität, die einem Merkmal aus dem Satz von Kandidatenmerkmalen entspricht;
Empfangen (1106) dritter Anwendungsdaten, die sich auf eine dritte Anwendung mit einem dritten bekannten Bedrohungsstatus beziehen;
Bestimmen (1108) einer dritten Verbindung zwischen der dritten Anwendung und der zweiten anwendungsbezogenen Entität;
Berechnen (1110), unter Verwendung der zweiten Anwendungsdaten, eines zweiten Merkmalsvektors, der Werte der Kandidatenmerkmale für die zweite Anwendung umfasst;
Berechnen (1110), unter Verwendung der dritten Anwendungsdaten, eines dritten Merkmalsvektors, der Werte der Kandidatenmerkmale für die dritte Anwendung umfasst;
Identifizieren (1112) einer merkmalsbasierten Beziehung zwischen der zweiten Anwendung und einer dritten Anwendung basierend auf einer Abstandsmetrik, die auf den zweiten Merkmalsvektor und den dritten Merkmalsvektor im Merkmalsraum der Kandidatenmerkmale angewendet wird;
Erzeugen (1114) einer Nachbarassoziation zwischen der zweiten Anwendung und der dritten Anwendung basierend auf: der zweiten Verbindung zwischen der zweiten Anwendung und der zweiten anwendungsbezogenen Entität, der dritten Verbindung zwischen der dritten Anwendung und der zweiten anwendungsbezogenen Entität, und der zwischen der zweiten Anwendung und der dritten Anwendung identifizierten merkmalsbasierten Beziehung; und
Validieren (1116) des Satzes von Kandidatenmerkmalen basierend auf der Nachbarassoziation, dem zweiten bekannten Bedrohungsstatus der zweiten Anwendung und dem dritten bekannten Bedrohungsstatus der dritten Anwendung.

11. Verfahren nach Anspruch 10, wobei bestimmt wird, dass der Satz von Kandidatenmerkmalen gültig ist, und das Verfahren umfasst:
Verwenden des Satzes von Kandidatenmerkmalen, um einen Merkmalsraum für den Merkmalsvektor jeder Anwendung in den Anwendungsdaten zu definieren, die sich auf die Vielzahl von Anwendungen beziehen.

12. Verfahren nach Anspruch 11, wobei bestimmt wird, dass der Satz von Kandidatenmerkmalen ungültig ist, und das Verfahren umfasst:
Auswählen, aus der Vielzahl von Merkmalen, die anwendungsbezogenen Entitäten entsprechen, eines modifizierten Satzes von Kandidatenmerkmalen, der einen modifizierten Merkmalsraum zum Bestimmen einer Bösartigkeit einer Anwendung definiert;
Berechnen eines modifizierten zweiten Merkmalsvektors der zweiten Anwendung in dem modifizierten Merkmalsraum;
Berechnen eines modifizierten dritten Merkmalsvektors der dritten Anwendung in dem modifizierten Merkmalsraum;
Identifizieren einer zweiten merkmalsbasierten Beziehung zwischen der zweiten Anwendung und der dritten Anwendung basierend auf einer zweiten Abstandsmetrik, die auf den modifizierten zweiten Merkmalsvektor und den modifizierten dritten Merkmalsvektor in dem modifizierten Merkmalsraum des modifizierten Merkmalsraums angewendet wird;
Erzeugen einer Nachbarassoziation zwischen der zweiten Anwendung und der dritten Anwendung basierend auf: der zweiten Verbindung zwischen der zweiten Anwendung und der zweiten anwendungsbezogenen Entität, der dritten Verbindung zwischen der zweiten Anwendung und der zweiten anwendungsbezogenen Entität, und der zweiten zwischen der zweiten Anwendung und der dritten Anwendung identifizierten merkmalsbasierten Beziehung; und
Validieren des modifizierten Satzes von Kandidatenmerkmalen basierend auf der Nachbarassoziation, dem zweiten bekannten Bedrohungsstatus der zweiten Anwendung und dem dritten bekannten Bedrohungsstatus der dritten Anwendung.

13. Verfahren nach einem der vorstehenden Ansprüche, wobei die Vielzahl von anwendungsbezogenen Entitäten mindestens eines von Folgendem umfasst:
eine Herausgeberkennung; eine Mandantenkennung; einen Antwort-Uniform-Resource-Locator, URL.

14. Computervorrichtung (1200), umfassend:
eine Verarbeitungseinheit (1202);
einen Speicher (1204), der mit der Verarbeitungseinheit (1202) gekoppelt ist und konfiguriert ist, um ausführbare Anweisungen zu speichern, die bei Ausführung durch die Verarbeitungseinheit (1202) konfiguriert sind, um die Verarbeitungseinheit (1202) zu veranlassen zum:
Empfangen (1250) von Anwendungsdaten, die sich auf eine Vielzahl von Anwendungen beziehen, die jeweils einen entsprechenden bekannten Bedrohungsstatus aufweisen, und Berechnen (1252) einer Vielzahl von Merkmalsvektoren unter Verwendung der Anwendungsdaten, wobei die Vielzahl von Merkmalsvektoren einen Merkmalsvektor für jede Anwendung in den Anwendungsdaten umfasst, wobei der Merkmalsvektor Werte von Merkmalen umfasst, die einer Vielzahl von anwendungsbezogenen Entitäten für die Vielzahl von Anwendungen entsprechen, wobei jede anwendungsbezogene Entität der Vielzahl von anwendungsbezogenen Entitäten einem Merkmal der Merkmale entspricht;
Bestimmen (1254) mindestens einer benachbarten Anwendung für jede Anwendung in der Vielzahl von Anwendungen;
Trainieren (1256) eines Bedrohungserkennungsmodells basierend auf dem bekannten Bedrohungsstatus jeder Anwendung in der Vielzahl von Anwendungen und mindestens einem Merkmalsvektor von ihrer mindestens einen benachbarten Anwendung, wobei die Vielzahl von Merkmalsvektoren den mindestens einen Merkmalsvektor umfasst;
Berechnen (1258), aus dem trainierten Bedrohungserkennungsmodell, von Merkmalsgewichtungen, die für eine relative Wichtigkeit der Merkmale in dem mindestens einen Merkmalsvektor der mindestens einen benachbarten Anwendung repräsentativ sind;
Berechnen (1260), für jede Anwendung und jedes Merkmal, eines Produkts aus einem Reputationswert der Anwendung und der Merkmalsgewichtung des Merkmals;
für jeden Wert jedes Merkmals, Bestimmen (1262) aller Vorkommen des Wertes des Merkmals in den Merkmalsvektoren der mindestens einen benachbarten Anwendung für jede Anwendung; und
Aggregieren (1264) der Produkte aus dem Reputationswert der Anwendung und der Merkmalsgewichtung über die Vorkommen, was dadurch zu einem Reputationswert für die anwendungsbezogene Entität führt, die dem Wert des Merkmals entspricht.

15. Computerlesbare Speichervorrichtung (1200), umfassend Anweisungen, die durch einen Prozessor ausführbar sind zum:
Empfangen (1250) von Anwendungsdaten, die sich auf eine Vielzahl von Anwendungen beziehen, die jeweils einen entsprechenden bekannten Bedrohungsstatus aufweisen, und Berechnen (1252) einer Vielzahl von Merkmalsvektoren unter Verwendung der Anwendungsdaten, wobei die Vielzahl von Merkmalsvektoren einen Merkmalsvektor für jede Anwendung in den Anwendungsdaten umfasst, wobei der Merkmalsvektor Werte von Merkmalen umfasst, die einer Vielzahl von anwendungsbezogenen Entitäten für die Vielzahl von Anwendungen entsprechen, wobei jede anwendungsbezogene Entität der Vielzahl von anwendungsbezogenen Entitäten einem Merkmal der Merkmale entspricht;
Bestimmen (1254) mindestens einer benachbarten Anwendung für jede Anwendung in der Vielzahl von Anwendungen;
Trainieren (1256) eines Bedrohungserkennungsmodells basierend auf dem bekannten Bedrohungsstatus jeder Anwendung in der Vielzahl von Anwendungen und mindestens einem Merkmalsvektor von ihrer mindestens einen benachbarten Anwendung, wobei die Vielzahl von Merkmalsvektoren den mindestens einen Merkmalsvektor umfasst;
Berechnen (1258), aus dem trainierten Bedrohungserkennungsmodell, von Merkmalsgewichtungen, die für eine relative Wichtigkeit der Merkmale in dem mindestens einen Merkmalsvektor der mindestens einen benachbarten Anwendung repräsentativ sind;
Berechnen (1260), für jede Anwendung und jedes Merkmal, eines Produkts aus einem Reputationswert der Anwendung und der Merkmalsgewichtung des Merkmals;
für jeden Wert jedes Merkmals, Bestimmen (1262) aller Vorkommen des Wertes des Merkmals in den Merkmalsvektoren der mindestens einen benachbarten Anwendung für jede Anwendung; und
Aggregieren (1264) der Produkte aus dem Reputationswert der Anwendung und der Merkmalsgewichtung über die Vorkommen, was dadurch zu einem Reputationswert für die anwendungsbezogene Entität führt, die dem Wert des Merkmals entspricht.

## Revendications

1. Procédé comprenant :
la réception (1250) de données d'application relatives à une pluralité d'applications ayant chacune un état de menace connu respectif ;
le calcul (1252) d'une pluralité de vecteurs de caractéristiques à l'aide des données d'application, la pluralité de vecteurs de caractéristiques comprenant un vecteur de caractéristiques pour chaque application dans les données d'application, le vecteur de caractéristiques comprenant des valeurs de caractéristiques correspondant à une pluralité d'entités liées à des applications pour la pluralité d'applications, dans lequel chaque entité liée à des applications de la pluralité d'entités liées à des applications correspond à une caractéristique parmi les caractéristiques ;
la détermination (1254) d'au moins une application voisine pour chaque application de la pluralité d'applications ;
l'entraînement (1256) d'un modèle de détection de menaces en fonction de l'état de menace connu de chaque application de la pluralité d'applications et d'au moins un vecteur de caractéristiques de son au moins une application voisine, dans lequel la pluralité de vecteurs de caractéristiques comprennent l'au moins un vecteur de caractéristiques ;
le calcul (1258), à partir du modèle de détection de menaces entraîné, de pondérations de caractéristiques représentatives de l'importance relative des caractéristiques dans l'au moins un vecteur de caractéristiques de l'au moins une application voisine ;
le calcul (1260), pour chaque application et chaque caractéristique, d'un produit d'un score de réputation de l'application et de la pondération de caractéristique de la caractéristique ;
pour chaque valeur de chaque caractéristique, la détermination (1262) de toutes les occurrences de la valeur de la caractéristique dans les vecteurs de caractéristiques de l'au moins une application voisine pour chaque application ; et
l'agrégation (1264) des produits du score de réputation de l'application et de la pondération de caractéristique à travers les occurrences, ce qui donne un score de réputation pour l'entité liée à une application correspondant à la valeur de la caractéristique.

2. Procédé selon la revendication 1, comprenant : la mise en œuvre d'une action d'atténuation de cybersécurité (969) en fonction du score de réputation pour l'entité liée à une application.

3. Procédé selon la revendication 1 ou la revendication 2, dans lequel le procédé comprend :
l'entraînement d'un deuxième modèle de détection de menaces (960) pour prédire si une application est malveillante ou non en fonction de l'état de menace connu de chaque application d'une seconde pluralité d'applications et du score de réputation pour chaque entité liée à une application de chaque application de la seconde pluralité d'applications.

4. Procédé selon la revendication 3, comprenant :
la réception de données d'application supplémentaires relatives à une première application ;
la détermination d'un score de réputation pour chacune d'au moins une entité liée à une application de la première application ;
l'introduction du score de réputation de chacune de l'au moins une entité liée à une application dans le deuxième modèle de détection de menaces entraîné pour prédire si la première application est malveillante ou non.

5. Procédé selon la revendication 4, dans lequel la première application est prédite comme étant malveillante, et dans lequel le procédé comprend :
la mise en œuvre d'une action d'atténuation de cybersécurité (969) pour la première application.

6. Procédé selon l'une quelconque revendication précédente, dans lequel la pluralité d'entités liées à des applications peuvent être mesurées pour une application nouvellement publiée.

7. Procédé selon l'une quelconque revendication précédente, dans lequel le score de réputation de l'application est déterminé à l'aide d'un score d'anomalie de l'application au sein de la pluralité d'applications.

8. Procédé selon l'une quelconque revendication précédente, dans lequel le score de réputation de l'application est déterminé à l'aide d'un troisième modèle de détection de menaces.

9. Procédé selon l'une quelconque revendication précédente, dans lequel la détermination de l'au moins une application voisine pour chaque application de la pluralité d'applications comprend, pour chaque application :
la détermination d'une connexion entre l'application et une première entité liée à une application ;
la détermination d'au moins une autre application de la pluralité d'applications qui présente une connexion avec la première entité liée à une application ;
le calcul d'une métrique de distance entre le vecteur de caractéristiques de l'application et le vecteur de caractéristiques de chacune d'au moins une autre application ;
la détermination, en fonction de l'au moins une métrique de distance calculée, d'un nombre prédéterminé de ladite au moins une autre application qui sont les plus proches du vecteur de caractéristiques de l'application en tant qu'au moins une application voisine.

10. Procédé selon l'une quelconque revendication précédente, comprenant :
la sélection (1100) parmi une pluralité de caractéristiques correspondant à des entités liées à des applications, d'un ensemble de caractéristiques candidates définissant un espace de caractéristiques pour déterminer la malveillance d'applications ;
la réception (1102) de deuxièmes données d'application relatives à une deuxième application ayant un deuxième état de menace connu ;
la détermination (1104) d'une deuxième connexion entre la deuxième application et une deuxième entité liée à une application correspondant à une caractéristique de l'ensemble de caractéristiques candidates ;
la réception (1106) de troisièmes données d'application relatives à une troisième application ayant un troisième état de menace connu ;
la détermination (1108) d'une troisième connexion entre la troisième application et la deuxième entité liée à une application ;
le calcul (1110), à l'aide des deuxièmes données d'application, d'un deuxième vecteur de caractéristiques comprenant des valeurs des caractéristiques candidates pour la deuxième application ;
le calcul (1110), à l'aide des troisièmes données d'application, d'un troisième vecteur de caractéristiques comprenant des valeurs des caractéristiques candidates pour la troisième application ;
l'identification (1112) d'une relation en fonction des caractéristiques entre la deuxième application et une troisième application en fonction d'une métrique de distance appliquée au deuxième vecteur de caractéristiques et au troisième vecteur de caractéristiques dans l'espace de caractéristiques des caractéristiques candidates ;
la génération (1114) d'une association de voisinage entre la deuxième application et la troisième application en fonction de : la deuxième connexion entre la deuxième application et la deuxième entité liée à une application, de la troisième connexion entre la troisième application et la deuxième entité liée à une application, et de la relation basée sur les caractéristiques identifiée entre la deuxième application et la troisième application ; et
la validation (1116) de l'ensemble de caractéristiques candidates en fonction de l'association de voisinage, du deuxième état de menace connu de la deuxième application et du troisième état de menace connu de la troisième application.

11. Procédé selon la revendication 10, dans lequel l'ensemble de caractéristiques candidates est déterminé comme étant valide, et le procédé comprend :
l'utilisation de l'ensemble de caractéristiques candidates pour définir un espace de caractéristiques pour le vecteur de caractéristiques de chaque application dans les données d'application relatives à la pluralité d'applications.

12. Procédé selon la revendication 11, dans lequel l'ensemble de caractéristiques candidates est déterminé comme étant invalide, et le procédé comprend :
la sélection parmi la pluralité de caractéristiques correspondant à des entités liées à des applications, d'un ensemble modifié de caractéristiques candidates définissant un espace de caractéristiques modifié pour déterminer la malveillance d'une application ;
le calcul d'un deuxième vecteur de caractéristiques modifié de la deuxième application dans l'espace de caractéristiques modifié ;
le calcul d'un troisième vecteur de caractéristiques modifié de la troisième application dans l'espace de caractéristiques modifié ;
l'identification d'une deuxième relation basée sur les caractéristiques entre la deuxième application et la troisième application en fonction d'une deuxième métrique de distance appliquée au deuxième vecteur de caractéristiques modifié et au troisième vecteur de caractéristiques modifié dans l'espace de caractéristiques modifié ;
la génération d'une association de voisinage entre la deuxième application et la troisième application en fonction de : la deuxième connexion entre la deuxième application et la seconde entité liée à une application, de la troisième connexion entre la deuxième application et la deuxième entité liée à une application, et de la deuxième relation basée sur les caractéristiques identifiée entre la seconde application et la troisième application ; et
la validation de l'ensemble modifié de caractéristiques candidates en fonction de l'association de voisinage, du deuxième état de menace connu de la deuxième application et du troisième état de menace connu de la troisième application.

13. Procédé selon l'une quelconque des revendications précédentes, dans lequel la pluralité d'entités liées à des applications comprend au moins un élément parmi :
un identifiant d'éditeur ; un identifiant de locataire ;
une URL (Uniform Resource Locator) de réponse.

14. Dispositif informatique (1200) comprenant :
une unité de traitement (1202) ;
une mémoire (1204) couplée à l'unité de traitement (1202) et configurée pour stocker des instructions exécutables qui, lors de leur exécution par l'unité de traitement (1202), sont configurées pour amener l'unité de traitement (1202) à :
recevoir (1250) des données d'application relatives à une pluralité d'applications ayant chacune un état de menace connu respectif et le calcul (1252) d'une pluralité de vecteurs de caractéristiques à l'aide des données d'application, la pluralité de vecteurs de caractéristiques comprenant un vecteur de caractéristiques pour chaque application dans les données d'application, le vecteur de caractéristiques comprenant des valeurs de caractéristiques correspondant à une pluralité d'entités liées à des applications pour la pluralité d'applications, dans lequel chaque entité liée à des applications de la pluralité d'entités liées à des applications correspond à une caractéristique parmi les caractéristiques ;
déterminer (1254) au moins une application voisine pour chaque application de la pluralité d'applications ;
entraîner (1256) un modèle de détection de menaces en fonction de l'état de menace connu de chaque application de la pluralité d'applications et d'au moins un vecteur de caractéristiques de son au moins une application voisine, dans lequel la pluralité de vecteurs de caractéristiques comprend l'au moins un vecteur de caractéristiques ;
calculer (1258), à partir du modèle de détection de menaces entraîné, des pondérations de caractéristiques représentatives de l'importance relative des caractéristiques dans l'au moins un vecteur de caractéristiques de l'au moins une application voisine ;
calculer (1260), pour chaque application et chaque caractéristique, un produit d'un score de réputation de l'application et de la pondération de caractéristique de la caractéristique ;
pour chaque valeur de chaque caractéristique, déterminer (1262) toutes les occurrences de la valeur de la caractéristique dans les vecteurs de caractéristiques de l'au moins une application voisine pour chaque application ; et
agréger (1264) les produits du score de réputation de l'application et de la pondération de caractéristique à travers les occurrences, ce qui donne un score de réputation pour l'entité liée à une application correspondant à la valeur de la caractéristique.

15. Dispositif de stockage lisible par ordinateur (1200) comprenant des instructions exécutables par un processeur pour :
la réception (1250) de données d'application relatives à une pluralité d'applications ayant chacune un état de menace connu respectif et le calcul (1252) d'une pluralité de vecteurs de caractéristiques à l'aide des données d'application, la pluralité de vecteurs de caractéristiques comprenant un vecteur de caractéristiques pour chaque application dans les données d'application, le vecteur de caractéristiques comprenant des valeurs de caractéristiques correspondant à une pluralité d'entités liées à des applications pour la pluralité d'applications, dans lequel chaque entité liée à des applications de la pluralité d'entités liées à des applications correspond à une caractéristique parmi les caractéristiques ;
la détermination (1254) d'au moins une application voisine pour chaque application de la pluralité d'applications ;
l'entraînement (1256) d'un modèle de détection de menaces en fonction de l'état de menace connu de chaque application de la pluralité d'applications et d'au moins un vecteur de caractéristiques de son au moins une application voisine, dans lequel la pluralité de vecteurs de caractéristiques comprennent l'au moins un vecteur de caractéristiques ;
le calcul (1258), à partir du modèle de détection de menaces entraîné, de pondérations de caractéristiques représentatives de l'importance relative des caractéristiques dans l'au moins un vecteur de caractéristiques de l'au moins une application voisine ;
le calcul (1260), pour chaque application et chaque caractéristique, d'un produit d'un score de réputation de l'application et de la pondération de caractéristique de la caractéristique ;
pour chaque valeur de chaque caractéristique, la détermination (1262) de toutes les occurrences de la valeur de la caractéristique dans les vecteurs de caractéristiques de l'au moins une application voisine pour chaque application ; et
l'agrégation (1264) des produits du score de réputation de l'application et de la pondération de caractéristique à travers les occurrences, ce qui donne un score de réputation pour l'entité liée à une application correspondant à la valeur de la caractéristique.
